(19) Europäisches Patentamt
European Patent Office
Office européen des brevets

(11) **EP 4 036 135 A1**

(12) **EUROPEAN PATENT APPLICATION**
published in accordance with Art. 153(4) EPC

(43) Date of publication:
**03.08.2022 Bulletin 2022/31**

(21) Application number: **20869234.3**

(22) Date of filing: **25.09.2020**

(51) International Patent Classification (IPC):
*C08F 291/02* (2006.01)    *C08L 33/04* (2006.01)
*C08L 51/04* (2006.01)    *C09J 133/04* (2006.01)
*C09J 151/00* (2006.01)    *C09J 163/00* (2006.01)
*C08L 63/00* (2006.01)

(52) Cooperative Patent Classification (CPC):
**C08F 291/02; C08L 33/04; C08L 51/04;
C08L 63/00; C09J 133/04; C09J 151/00;
C09J 163/00**

(86) International application number:
**PCT/JP2020/036319**

(87) International publication number:
**WO 2021/060486 (01.04.2021 Gazette 2021/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.09.2019 JP 2019177486**

(71) Applicant: **Kaneka Corporation
Osaka-shi, Osaka 530-8288 (JP)**

(72) Inventor: **MAIZURU, Nobuyoshi
Takasago-shi, Hyogo 676-8688 (JP)**

(74) Representative: **Vossius & Partner
Patentanwälte Rechtsanwälte mbB
Siebertstraße 3
81675 München (DE)**

(54) **ADHESIVE AGENT AND METHOD FOR PRODUCING ADHESIVE AGENT**

(57) The present invention has an object to achieve an adhesive agent that is favorable in terms of peeling form, adhesive strength, and viscosity. The present invention uses an adhesive agent containing: an epoxy resin (A); and with respect to 100 parts by mass of the epoxy resin (A), 1 part by mass to 100 parts by mass of fine polymer particles (B) and 1 part by mass to 100 parts by mass of a non-crosslinked acrylic resin (C), the fine polymer particles (B) containing a rubber-containing graft copolymer that includes (i) an elastic body containing a specific material and (ii) a graft part containing a specific material.

FIG. 1

**Description**

Technical Field

The present invention relates to an adhesive agent and a method for producing an adhesive agent.

Background Art

Conventionally, in various fields, a technique for causing adherends to adhere to each other via an adhesive agent has been used in various fields, and various adhesive agents have been developed so far. For example, Patent Literature 1 not only discloses a curable composition containing an organic polymer and fine polymer particles but also discloses a technique for using the curable composition to cause various substrates to adhere to each other (see, for example, Patent Literature 1).

Citation List

[Patent Literature]

[Patent Literature 1]

Japanese Patent Application Publication Tokukai No. 2018-053026

Summary of Invention

Technical Problem

However, the conventional adhesive agent as described above has room for improvement. An adhesive agent that is excellent particularly in peeling form, adhesive strength, and viscosity among the properties of the adhesive agent is required to be developed.

An aspect of the present invention has an object to achieve an adhesive agent that is favorable in terms of peeling form, adhesive strength, and viscosity.

Solution to Problem

The inventors of the present invention conducted diligent research in order to solve the problem, and found that an adhesive agent containing an epoxy resin, fine polymer particles, and a non-crosslinked acrylic resin makes it possible to achieve an adhesive agent that is favorable in terms of the following three properties: peeling form, adhesive strength, and viscosity. On the basis of this finding, the inventors accomplished the present invention.

An adhesive agent in accordance with an embodiment of the present invention contains: an epoxy resin (A); and with respect to 100 parts by mass of the epoxy resin (A), 1 part by mass to 100 parts by mass of fine polymer particles (B) and 1 part by mass to 100 parts by mass of a non-crosslinked acrylic resin (C), the fine polymer particles (B) containing a rubber-containing graft copolymer that includes an elastic body and a graft part grafted to the elastic body, the elastic body containing at least one selected from the group consisting of diene-based rubbers, (meth)acrylate-based rubbers, and organosiloxane-based rubbers, the graft part containing a polymer that contains, as one or more structural units, one or more structural units derived from at least one type of monomer selected from the group consisting of aromatic vinyl monomers, vinyl cyanide monomers, and (meth)acrylate monomers, the non-crosslinked acrylic resin (C) forming a domain in a cured product that is obtained by curing the adhesive agent, and the fine polymer particles (B) having an average particle size that is larger than a longitudinal dimension of the domain.

Advantageous Effects of Invention

An aspect of the present invention makes it possible to achieve an adhesive agent that is favorable in terms of peeling form, adhesive strength, and viscosity.

Brief Description of Drawings

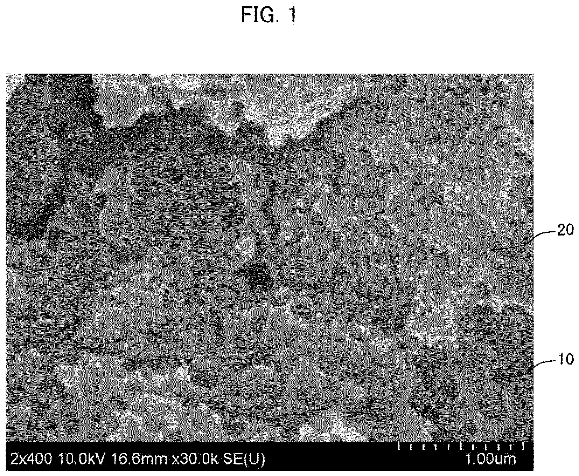

Fig. 1 is a SEM image of a cured product of an adhesive agent of Example 3.

Description of Embodiments

The following description will discuss embodiments of the present invention. The present invention is not, however, limited to these embodiments. The present invention is not limited to the configurations described below, but may be altered in various ways within the scope of the claims. The present invention also encompasses, in its technical scope, any embodiment derived by combining technical means disclosed in differing embodiments and Examples. Further, it is possible to form a new technical feature by combining the technical means disclosed in the respective embodiments. All academic and patent literatures cited in the present specification are incorporated herein by reference. Any numerical range expressed as "A to B" herein means "not less than A and not more than B (i.e., a range from A to B which includes both A and B)" unless otherwise stated.

[1. Overview of an embodiment of the present invention]

The inventor of the present invention finally considered that an adhesive agent is required to have various properties and that it is necessary to develop an adhesive agent that simultaneously has a plurality of properties.

A first important property of an adhesive agent can be peeling form. In a case where adherend materials having adhered to each other via an adhesive agent are peeled from each other (for example, subjected to T-peeling), (i) peeling form in which peeling occurs at an interface between the adhesive agent and the respective adherend materials is referred to as an interfacial failure, (ii) peeling form in which peeling occurs in the adhesive agent is referred to as a cohesive failure, and (iii) peeling form in which peeling occurs in the adherend materials is referred to as a material failure. Among these peeling forms, a cohesive failure is preferable from the viewpoint of reliability of an adhesive agent.

That is, in the present specification, an "adhesive agent favorable in terms of peeling form" means an adhesive agent whose peeling form is a cohesive failure.

A second important property of an adhesive agent can be adhesive strength. An adhesive agent that has a too low adhesive strength makes it impossible to cause adherend materials to adhere to each other. Thus, an adhesive agent is required to have an appropriate adhesive strength.

A third important property of an adhesive agent can be viscosity. An adhesive agent that has a too high viscosity is difficult to handle. Thus, an adhesive agent is required to have an appropriate viscosity.

An aspect of the present invention achieves an adhesive agent that is favorable in terms of all the following three properties: peeling form, adhesive strength, and viscosity, which have been described earlier.

[2. Adhesive agent]

An adhesive agent in accordance with an embodiment of the present invention contains: an epoxy resin (A); and with respect to 100 parts by mass of the epoxy resin (A), 1 part by mass to 100 parts by mass of fine polymer particles (B) and 1 part by mass to 100 parts by mass of a non-crosslinked acrylic resin (C), the fine polymer particles (B) containing a rubber-containing graft copolymer that includes an elastic body and a graft part grafted to the elastic body, the elastic body containing at least one selected from the group consisting of diene-based rubbers, (meth)acrylate-based rubbers, and organosiloxane-based rubbers, the graft part containing a polymer that contains, as one or more structural units, one or more structural units derived from at least one type of monomer selected from the group consisting of aromatic vinyl monomers, vinyl cyanide monomers, and (meth)acrylate monomers, the non-crosslinked acrylic resin (C) forming a domain in a cured product that is obtained by curing the adhesive agent, and the fine polymer particles (B) having an average particle size that is larger than a longitudinal dimension of the domain. A cured product of the adhesive agent can also be referred to as an adhesive layer.

An adhesive agent containing the epoxy resin (A) and the fine polymer particles (B) has a favorable adhesive strength due to the fine polymer particles (B) but shows a tendency to deteriorate in peeling form. In contrast, the adhesive agent in accordance with an embodiment of the present invention has a favorable peeling form. The non-crosslinked acrylic resin (C) contained in the adhesive agent in accordance with an embodiment of the present invention is precipitated as particles after the epoxy resin (A) is cured, and the particles form a sea-island structure in a cured product. It is considered that the sea-island structure allows the adhesive agent to have a favorable peeling form. Furthermore, the non-crosslinked acrylic resin (C) has a small influence on the viscosity of the adhesive agent. The adhesive agent in accordance with an embodiment of the present invention is therefore low in viscosity and favorable.

"An adhesive agent in accordance with an embodiment of the present invention" may be hereinafter referred to as "the present adhesive agent".

(2-1. Epoxy resin (A))

The epoxy resin (A) is not limited to any particular ones, provided that the epoxy resin (A) has at least one epoxy group in its molecule.

It is possible to use, as the epoxy resin (A), various types of epoxy resin, except for a rubber-modified epoxy resin and a urethane-modified epoxy resin each described later. Specific examples of the epoxy resin (A) encompass bisphenol A epoxy resin, bisphenol F epoxy resin, bisphenol AD epoxy resin, bisphenol S epoxy resin, glycidyl ester type epoxy resin, glycidyl amine type epoxy resin, novolac type epoxy resin, glycidyl ether epoxy resin of bisphenol A propylene oxide adduct, hydrogenated bisphenol A (or F) epoxy resin, fluorinated epoxy resin, flame-resistant epoxy resin such as glycidyl ether of tetrabromo bisphenol A, p-oxybenzoic acid glycidyl ether ester type epoxy resin, m-aminophenol type epoxy resin, diaminodiphenylmethane-based epoxy resin, various types of alicyclic epoxy resin, glycidyl ether of a polyhydric alcohol, hydantoin-type epoxy resin, epoxidized unsaturated polymer such as petroleum resin, and amino-containing glycidyl ether resin.

Examples of the polyhydric alcohol encompass N,N-diglycidyl aniline, N,N-diglycidyl-o-toluidine, triglycidyl isocyanurate, resorcinol, polyalkylene glycol, and glycerin. Other examples of the epoxy resin (A) encompass an epoxy compound obtained by causing an addition reaction between one of the above epoxy resins and e.g. a bisphenol A (or F) or a polybasic acid. The epoxy resin (A) is not limited to these examples, and a generally used epoxy resin can be used. These epoxy resins may be used alone or in combination of two or more.

Out of these epoxy resins, epoxy resins each of which has at least two epoxy groups in one molecule are preferable in that, e.g., such resins have high reactivity during curing of the adhesive agent and make it easy for an obtained cured product to create a three-dimensional mesh. In addition, out of the epoxy resins each of which has at least two epoxy groups in one molecule, an epoxy resin which contains a bisphenol type epoxy resin as a main component is preferable as the epoxy resin (A), because such an epoxy resin is economical and easily available. Further, the epoxy resin (A) is preferably a hard epoxy resin, i.e., an epoxy resin having a specific glass transition temperature (Tg). For example, the epoxy resin (A) is preferably an epoxy resin having a Tg of not lower than 50°C.

Out of these epoxy resins (A), a bisphenol A epoxy resin or a bisphenol F epoxy resin is preferable because such an epoxy resin brings about an advantageous effect such that the resulting cured product has a high elastic modulus, is highly resistant to heat and highly adhesive, and is relatively inexpensive.

The epoxy resin (A) may have a viscosity of not more than 1,000,000 mPa·s, not more than 100,000 mPa·s, or not more than 10,000 mPa·s at 25°C. With this feature, it is possible to achieve an adhesive agent having a low viscosity.

(2-2. Fine polymer particles (B))

The fine polymer particles (B) contain a rubber-containing graft copolymer that includes an elastic body and a graft part grafted to the elastic body.

The present adhesive agent contains 1 part by mass to 100 parts by mass, preferably 5 parts by mass to 50 parts by mass, more preferably 5 parts by mass to 30 parts by mass of the fine polymer particles (B), with respect to 100 parts by mass of the epoxy resin (A). The adhesive agent that contains the fine polymer particles (B) in a larger amount can have a higher adhesive strength.

(2-2-1. Elastic body)

The elastic body contains at least one selected from the group consisting of diene-based rubbers, (meth)acrylate-based rubbers, and organosiloxane-based rubbers. The elastic body may contain natural rubber other than the above described rubber. The elastic body can also be referred to as elastic part(s) or rubber particle(s). In the present specification, (meth)acrylate means acrylate and/or methacrylate.

A case where the elastic body contains a diene-based rubber (case A) will be described below. In the case A, a resulting adhesive agent can provide an adhesive layer which has excellent toughness and excellent impact resistance. It can be said that an adhesive layer that has excellent toughness and/or excellent impact resistance is an adhesive layer that has excellent durability.

The diene-based rubber is an elastic body containing, as a structural unit, a structural unit derived from a diene-based monomer. The diene-based monomer can also be referred to as a conjugated diene-based monomer. In the case A, the diene-based rubber may contain (i) the structural unit derived from the diene-based monomer in an amount of 50% by weight to 100% by weight and (ii) a structural unit derived from a vinyl-based monomer, which is different from the diene-based monomer and which is copolymerizable with the diene-based monomer, in an amount of 0% by weight to 50% by weight, with respect to 100% by weight of structural units. In the case A, the diene-based rubber may contain, as a structural unit, a structural unit derived from a (meth)acrylate-based monomer in an amount smaller than the amount of the structural unit derived from the diene-based monomer.

Examples of the diene-based monomer encompass 1,3-butadiene, isoprene (2-methyl-1,3-butadiene), and 2-chloro-1,3-butadiene. These diene-based monomers may be used alone or in combination of two or more.

Examples of the vinyl-based monomer which is different from the diene-based monomer and which is copolymerizable with the diene-based monomer (hereinafter also referred to as vinyl-based monomer A) encompass: (a) vinyl arenes such as styrene, α-methylstyrene, monochlorostyrene, and dichlorostyrene; (b) vinyl carboxylic acids such as acrylic acid and methacrylic acid; (c) vinyl cyanides such as acrylonitrile and methacrylonitrile; (d) vinyl halides such as vinyl chloride, vinyl bromide, and chloroprene; (e) vinyl acetate; (f) alkenes such as ethylene, propylene, butylene, and isobutylene; and (g) polyfunctional monomers such as diallyl phthalate, triallyl cyanurate, triallyl isocyanurate, and divinylbenzene. These vinyl-based monomers A may be used alone or in combination of two or more. Out of these vinyl-based monomers A, styrene is particularly preferable.

In the case A, the diene-based rubber is preferably (i) butadiene rubber which is constituted by a structural unit derived from 1,3-butadiene (also referred to as polybutadiene rubber) or (ii) butadiene-styrene rubber which is a copolymer of 1,3-butadiene and styrene (also referred to as polystyrene-butadiene). The diene-based rubber is more preferably butadiene rubber. According to the above feature, since the elastic body contains the diene-based rubber, a desired effect can be more brought about. The butadiene-styrene rubber is more preferable in that the butadiene-styrene rubber makes it possible to, by adjustment of a refractive index, increase the transparency of the resulting adhesive layer.

A case where the elastic body includes a (meth)acrylate-based rubber (case B) will be described below. The case B allows wide-ranging polymer design for the elastic body by combinations of many types of monomers.

The (meth)acrylate-based rubber is an elastic body containing, as a structural unit, a structural unit derived from a (meth)acrylate-based monomer. In the case B, the (meth)acrylate-based rubber may contain (i) the structural unit derived from the (meth)acrylate-based monomer in an amount of 50% by weight to 100% by weight and (ii) a structural unit derived from a vinyl-based monomer, which is different from the (meth)acrylate-based monomer and which is copolymerizable with the (meth)acrylate-based monomer, in an amount of 0% by weight to 50% by weight, with respect to 100% by weight of structural units. In the case B, the (meth)acrylate-based rubber may contain, as a structural unit, a structural unit derived from a diene-based monomer in an amount smaller than the amount of the structural unit derived from the (meth)acrylate-based monomer.

Examples of the (meth)acrylate-based monomer encompass: (a) alkyl (meth)acrylates such as methyl (meth)acrylate, ethyl (meth)acrylate, butyl (meth)acrylate, 2-ethylhexyl (meth)acrylate, octyl (meth)acrylate, dodecyl (meth)acrylate, stearyl (meth)acrylate, and behenyl (meth)acrylate; (b) aromatic ring-containing (meth)acrylates such as phenoxyethyl (meth)acrylate and benzyl (meth)acrylate; (c) hydroxyalkyl (meth)acrylates such as 2-hydroxyethyl (meth)acrylate and 4-hydroxybutyl (meth)acrylate; (d) glycidyl (meth)acrylates such as glycidyl (meth)acrylate and glycidyl alkyl (meth)acrylate; (e) alkoxy alkyl (meth)acrylates; (f) allyl alkyl (meth)acrylates such as allyl (meth)acrylate and allyl alkyl (meth)acrylate; and (g) polyfunctional (meth)acrylates such as monoethylene glycol di(meth)acrylate, triethylene glycol di(meth)acrylate, and tetraethylene glycol di(meth)acrylate. These (meth)acrylate-based monomers may be used alone or in combination of two or more. Out of these (meth)acrylate-based monomers, ethyl (meth)acrylate, butyl (meth)acrylate, and 2-ethylhexyl (meth)acrylate are preferred, and butyl (meth)acrylate is more preferred.

In the case B, the (meth)acrylate-based rubber is preferably at least one selected from the group consisting of ethyl (meth)acrylate rubbers, butyl (meth)acrylate rubbers, and 2-ethylhexyl (meth)acrylate rubbers, and is more preferably a butyl (meth)acrylate rubber. An ethyl (meth)acrylate rubber is a rubber composed of structural units derived from ethyl (meth)acrylate(s), a butyl (meth)acrylate rubber is a rubber composed of structural units derived from butyl (meth)acrylate(s), and a 2-ethylhexyl (meth)acrylate rubber is a rubber composed of structural units derived from 2-ethylhexyl (meth)acrylate(s). With this feature, the elastic body has a lower glass transition temperature (Tg), and thus the fine polymer particles (B) containing the elastic body also has a lower glass transition temperature (Tg). As a result, (a) the resulting adhesive agent can provide an adhesive layer having excellent toughness, and (b) it is possible to cause the adhesive agent to have a lower viscosity.

Examples of the vinyl-based monomer which is different from the (meth)acrylate-based monomer and which is copolymerizable with the (meth)acrylate-based monomer (hereinafter also referred to as vinyl-based monomer B) encompass the monomers listed as the examples of the vinyl-based monomer A. Such vinyl-based monomers B may be used alone or in combination of two or more. Out of such vinyl-based monomers B, styrene is particularly preferable.

A case where the elastic body includes an organosiloxane-based rubber (case C) will be described below. In the case C, the resulting adhesive agent can provide an adhesive layer which has sufficient heat resistance and excellent impact resistance at low temperatures.

Examples of the organosiloxane-based rubber encompass (a) organosiloxane-based polymers composed of alkyl or aryl disubstituted silyloxy units, such as dimethylsilyloxy, diethylsilyloxy, methylphenylsilyloxy, diphenylsilyloxy, and dimethylsilyloxy-diphenylsilyloxy, and (b) organosiloxane-based polymers composed of alkyl or aryl monosubstituted silyloxy units, such as organohydrogensilyloxy in which some of sidechain alkyls have been substituted with hydrogen atoms. These organosiloxane-based polymers may be used alone or in combination of two or more.

In the present specification, a polymer composed of dimethylsilyloxy units is referred to as a dimethylsilyloxy rubber, a polymer composed of methylphenylsilyloxy units is referred to as a methylphenylsilyloxy rubber, and a polymer composed of dimethylsilyloxy units and diphenylsilyloxy units is referred to as a dimethylsilyloxy-diphenylsilyloxy rubber. In the case C, the organosiloxane-based rubber is preferably (a) at least one selected from the group consisting of dimethylsilyloxy rubbers, methylphenylsilyloxy rubbers and dimethylsilyloxy-diphenylsilyloxy rubbers, because the resulting adhesive agent can provide an adhesive layer which has excellent heat resistance, and is more preferably (b) a dimethylsilyloxy rubber because it can be easily obtained and is economical.

In the case C, it is preferable that the fine polymer particles (B) contain an organosiloxane-based rubber in an amount of not less than 80% by weight, more preferably not less than 90% by weight, with respect to 100% by weight of the elastic body contained in the fine polymer particles (B). With this feature, the resulting adhesive agent can provide an adhesive layer that has excellent heat resistance.

In an embodiment of the present invention, the elastic body is preferably at least one selected from the group consisting of butadiene rubbers, butadiene-styrene rubbers, butadiene-(meth)acrylate rubbers, ethyl (meth)acrylate rubbers, butyl (meth)acrylate rubbers, 2-ethylhexyl (meth)acrylate rubbers, dimethylsilyloxy rubbers, methylphenylsilyloxy rubbers, and dimethylsilyloxy-diphenylsilyloxy rubbers, and is more preferably at least one selected from the group consisting of butadiene rubbers, butadiene-styrene rubbers, butyl (meth)acrylate rubbers, and dimethylsilyloxy rubbers.

(Crosslinked structure of elastic body)

The elastic body preferably has a crosslinked structure introduced therein, because stable dispersion of the fine polymer particles (B) in the epoxy resin (A) can be maintained. A generally used method may be used to introduce a crosslinked structure into the elastic body. Examples of the generally used method encompass the following. That is, in production of the elastic body, a crosslinking monomer(s), such as a polyfunctional monomer and/or a mercapto group-containing compound, is/are mixed with a monomer which can constitute the elastic body, and then polymerization is carried out. In the present specification, producing a polymer such as the elastic body is also referred to as forming a polymer by polymerization.

A method of introducing a crosslinked structure into an organosiloxane-based rubber includes the following methods: (a) a method that involves using a polyfunctional alkoxysilane compound in combination with another material during formation of the organosiloxane-based rubber by polymerization: (b) a method that involves introducing, into the organosiloxane-based rubber, a reactive group (e.g., (a) mercapto group, (b) vinyl group having reactivity, and the like), and then adding (a) an organic peroxide, (b) a polymerizable vinyl monomer, or the like to the obtained reaction product to cause a radical reaction; and (c) a method that involves, during formation of the organosiloxane-based rubber by polymerization, mixing a crosslinking monomer(s), such as a polyfunctional monomer and/or a mercapto group-containing compound, together with another material and then carrying out polymerization.

It can also be said that the polyfunctional monomer is a monomer having two or more radical-polymerizable reactive groups in an identical molecule. The radical-polymerizable reactive groups are each preferably a carbon-carbon double bond. Examples of the polyfunctional monomer exclude butadiene and include (meth)acrylates having an ethylenically unsaturated double bond(s), such as allyl alkyl (meth)acrylates and allyl oxyalkyl (meth)acrylates. Examples of a monomer having two (meth)acrylic groups encompass ethylene glycol di(meth)acrylate, butylene glycol di(meth)acrylate, butanediol di(meth)acrylate, hexanediol di(meth)acrylate, cyclohexane dimethanol di(meth)acrylate, and polyethylene glycol di(meth)acrylates. Examples of the polyethylene glycol di(meth)acrylates encompass triethylene glycol di(meth)acrylate, tripropylene glycol di(meth)acrylate, tetraethylene glycol di(meth)acrylate, and polyethylene glycol (600) di(meth)acrylate. Examples of a monomer having three (meth)acrylic groups encompass alkoxylated trimethylolpropane tri(meth)acrylates, glycerol propoxy tri(meth)acrylate, pentaerythritol tri(meth)acrylate, and tris(2-hydroxyethyl)isocyanurate tri(meth)acrylate. Examples of the alkoxylated trimethylolpropane tri(meth)acrylates encompass trimethylolpropane tri(meth)acrylate and trimethylolpropane triethoxy tri(meth)acrylate. Examples of a monomer having four (meth)acrylic groups encompass pentaerythritol tetra(meth)acrylate and ditrimethylolpropane tetra(meth)acrylate. Examples of a monomer having five (meth)acrylic groups encompass dipentaerythritol penta(meth)acrylate. Examples of a monomer having six (meth)acrylic groups encompass ditrimethylolpropane hexa(meth)acrylate. Examples of the polyfunctional monomer also encompass diallyl phthalate, triallyl cyanurate, triallyl isocyanurate, and divinylbenzene.

Examples of the mercapto group-containing compound encompass alkyl group-substituted mercaptan, allyl group-substituted mercaptan, aryl group-substituted mercaptan, hydroxy group-substituted mercaptan, alkoxy group-substituted mercaptan, cyano group-substituted mercaptan, amino group-substituted mercaptan, silyl group-substituted mercaptan, acid radical-substituted mercaptan, halo group-substituted mercaptan, and acyl group-substituted mercaptan. The alkyl group-substituted mercaptan is preferably alkyl group-substituted mercaptan having 1 to 20 carbon atoms, and is more preferably alkyl group-substituted mercaptan having 1 to 10 carbon atoms. The aryl group-substituted mercaptan is preferably phenyl group-substituted mercaptan. The alkoxy group-substituted mercaptan is preferably alkoxy group-substituted mercaptan having 1 to 20 carbon atoms, and is more preferably alkoxy group-substituted mercaptan having 1 to 10 carbon atoms. The acid radical-substituted mercaptan is preferably alkyl group-substituted mercaptan having a carboxyl group and 1 to 10 carbon atoms or aryl group-substituted mercaptan having a carboxyl group and 1 to 12 carbon atoms.

(Glass transition temperature of elastic body)

The elastic body has a glass transition temperature of preferably not higher than 80°C, more preferably not higher than 70°C, more preferably not higher than 60°C, more preferably not higher than 50°C, more preferably not higher than 40°C, more preferably not higher than 30°C, more preferably not higher than 20°C, more preferably not higher than 10°C, more preferably not higher than 0°C, more preferably not higher than -20°C, more preferably not higher than -40°C, more preferably not higher than -45°C, more preferably not higher than -50°C, more preferably not higher than -55°C, more preferably not higher than -60°C, more preferably not higher than -65°C, more preferably not higher than -70°C, more preferably not higher than -75°C, more preferably not higher than -80°C, more preferably not higher than -85°C, more preferably not higher than -90°C, more preferably not higher than -95°C, more preferably not higher than -100°C, more preferably not higher than -105°C, more preferably not higher than -110°C, more preferably not higher than -115°C, even more preferably not higher than - 120°C, particularly preferably not higher than -125°C. In the present specification, the "glass transition temperature" may be referred to as "Tg". With this feature, it is possible to obtain the fine polymer particles (B) having a low glass transition temperature (Tg) and an adhesive agent having a low glass transition temperature (Tg). As a result, an adhesive agent can provide an adhesive layer which has excellent toughness. According to the above feature, the adhesive agent can have a lower viscosity. The Tg of the elastic body can be obtained by carrying out viscoelasticity measurement with use of a planar plate made of the fine polymer particles (B). Specifically, the Tg can be measured as follows: (1) a graph of tan δ is obtained by carrying out dynamic viscoelasticity measurement with respect to a planar plate made of the fine polymer particles (B), with use of a dynamic viscoelasticity measurement device (for example, DVA-200, manufactured by IT Keisoku Seigyo Kabushikigaisha) under a tension condition; and (2) in the graph of tan δ thus obtained, the peak temperature of tan δ is regarded as the glass transition temperature. Note, here, that in a case where a plurality of peaks are found in the graph of tan δ, the lowest peak temperature is regarded as the glass transition temperature of the elastic body.

In view of prevention of a decrease in elastic modulus (i.e., a decrease in rigidity) of the resulting cured product, i.e., in view of obtainment of the cured product which has a sufficient elastic modulus (rigidity), the Tg of the elastic body is preferably higher than 0°C, more preferably not lower than 20°C, even more preferably not lower than 50°C, particularly preferably not lower than 80°C, most preferably not lower than 120°C.

The Tg of the elastic body can be determined by, for example, the composition of the structural unit contained in the elastic body. In other words, it is possible to adjust the Tg of the resulting elastic body by changing the composition of the monomer used to produce (form by polymerization) the elastic body.

Note, here, that monomers each of which, when polymerized to form a homopolymer (i.e., a polymer obtained by polymerizing only one type of monomer), provides a homopolymer having a Tg of higher than 0°C will be referred to as a monomer group "a". Note also that monomers each of which, when polymerized to form a homopolymer (i.e., a polymer obtained by polymerizing only one type of monomer), provides a homopolymer having a Tg of lower than 0°C will be referred to as a monomer group "b". Note also that an elastic body containing (i) one or more structural units derived from at least one type of monomer selected from the monomer group "a" in an amount of 50% by weight to 100% by weight (more preferably 65% by weight to 99% by weight) and (ii) one or more structural units derived from at least one type of monomer selected from the monomer group "b" in an amount of 0% by weight to 50% by weight (more preferably 1% by weight to 35% by weight) will be referred to as an elastic body X. The elastic body X has a Tg higher than 0°C. In a case where the elastic body includes the elastic body X, the resulting adhesive agent can provide an adhesive layer which has sufficient rigidity.

Also in a case where the Tg of the elastic body is higher than 0°C, it is preferable that the crosslinked structure be introduced in the elastic body. Examples of a method of introducing the crosslinked structure into the elastic body encompass the above-described methods.

Examples of the monomers which can be included in the monomer group "a" encompass, but are not limited to, unsubstituted vinyl aromatic compounds such as styrene and 2-vinyl naphthalene; vinyl-substituted aromatic compounds such as α-methyl styrene; ring-alkylated vinyl aromatic compounds such as 3-methylstyrene, 4-methylstyrene, 2,4-dimethylstyrene, 2,5-dimethylstyrene, 3,5-dimethylstyrene, and 2,4,6-trimethylstyrene; ring-alkoxylated vinyl aromatic compounds such as 4-methoxystyrene and 4-ethoxystyrene; ring-halogenated vinyl aromatic compounds such as 2-chlorostyrene and 3-chlorostyrene; ring-ester-substituted vinyl aromatic compounds such as 4-acetoxy styrene; ring-hydroxylated vinyl aromatic compounds such as 4-hydroxystyrene; vinyl esters such as vinyl benzoate and vinyl cyclohexanoate; vinyl halides such as vinyl chloride; aromatic monomers such as acenaphthalene and indene; alkyl methacrylates such as methyl methacrylate, ethyl methacrylate, and isopropyl methacrylate; aromatic methacrylates such as phenyl methacrylate; methacrylates such as isobornyl methacrylate and trimethylsilyl methacrylate; methacrylic acid derivative-containing methacryl monomers such as methacrylonitrile; certain types of acrylic acid esters such as isobornyl acrylate and tert-butyl acrylate; and acrylic acid derivative-containing acrylic monomers such as acrylonitrile. Examples of the monomers which can be included in the monomer group "a" further encompass monomers each of which, when polymerized to form a homopolymer, can provide a homopolymer having a Tg of not lower than 120°C, such as acrylamide, isopropyl acrylamide, N-vinylpyrrolidone, isobornyl methacrylate, dicyclopentanyl methacrylate, 2-methyl-2-adamanthyl methacrylate, 1-adamanthyl acrylate, and 1-adamanthyl methacrylate. These monomers "a" may be used alone or in combination of two or more.

Examples of monomers "b" encompass ethyl acrylate, butyl acrylate, 2-ethylhexyl acrylate, octyl (meth)acrylate, dodecyl (meth)acrylate, 2-hydroxyethyl acrylate, and 4-hydroxybutyl acrylate. These monomers "b" may be used alone or in combination of two or more. Out of these monomers "b", ethyl acrylate, butyl acrylate, and 2-ethylhexyl acrylate are particularly preferable.

(Volume-average particle size of elastic body)

The elastic body has a volume-average particle size of preferably 0.03 $\mu$m to 50.00 $\mu$m, more preferably 0.05 $\mu$m to 10.00 $\mu$m, more preferably 0.08 $\mu$m to 2.00 $\mu$m, further preferably 0.10 $\mu$m to 1.00 $\mu$m, even more preferably 0.10 $\mu$m to 0.80 $\mu$m, particularly preferably 0.10 $\mu$m to 0.50 $\mu$m. In a case where the volume-average particle size of the elastic body is not less than 0.03 $\mu$m, the elastic body which has a desired volume-average particle size can be stably obtained. In a case where the volume-average particle size of the elastic body is not more than 50.00 $\mu$m, the resulting adhesive layer has favorable heat resistance and impact resistance. The volume-average particle size of the elastic body can be measured with use of a dynamic light scattering type particle size distribution measurement apparatus using, as a test specimen, an aqueous latex containing the elastic body.

(Proportion of elastic body)

A proportion of the elastic body contained in the fine polymer particles (B) is preferably 40% by weight to 97% by weight, more preferably 60% by weight to 95% by weight, even more preferably 70% by weight to 93% by weight, where 100% by weight represents the entirety of the fine polymer particles (B). In the case where the proportion of the elastic body is not less than 40% by weight, the resulting adhesive agent can provide a cured product which has excellent toughness and excellent impact resistance. In a case where the proportion of the elastic body is not more than 97% by weight, the fine polymer particles (B) do not easily agglutinate (i.e., less likely to agglutinate), and therefore the resulting adhesive agent does not have a high viscosity. As a result, the adhesive agent can be handled easily.

(Gel content of elastic body)

The elastic body is preferably one that can swell in an appropriate solvent but is substantially insoluble in the appropriate solvent. The elastic body is preferably insoluble in the epoxy resin (A) used.

The elastic body has a gel content of preferably not less than 60% by weight, more preferably not less than 80% by weight, even more preferably not less than 90% by weight, particularly preferably not less than 95% by weight. In a case where the gel content of the elastic body falls within the above range, the resulting adhesive agent can provide an adhesive layer which has excellent toughness.

In the present specification, a method of calculating the gel content is as follows. First, an aqueous latex containing the fine polymer particles (B) is obtained. Next, a powdery and/or granular material of the fine polymer particles (B) is obtained from the aqueous latex. A method of obtaining the powdery and/or granular material of the fine polymer particles (B) from the aqueous latex is not limited to any particular one, and examples thereof encompass a method of obtaining the powdery and/or granular material of the fine polymer particles (B) by (i) causing the fine polymer particles (B) in the aqueous latex to agglutinate, (ii) dehydrating the agglutinate thus obtained, and (iii) further drying the agglutinate. Next, 2.0 g of the powdery and/or granular material of the fine polymer particles (B) is dissolved in 50 mL of methyl ethyl ketone (MEK). The MEK solution of the powder thus obtained is separated into a part soluble in MEK (MEK-soluble part) and a part insoluble in MEK (MEK-insoluble part). Specifically, the obtained MEK solution of the powder is subjected to centrifugal separation with use of a centrifugal separator (CP60E, manufactured by Hitachi Koki Co., Ltd.) at 30000 rpm for 1 hour, and thereby separated into the MEK-soluble part and the MEK-insoluble part. Note, here, that three sets of centrifugal separations are carried out in total. The weight of the MEK-soluble part and the weight of the MEK-insoluble part are measured, and then the gel content is calculated with use of the following expression.

$$\text{Gel content (\%)} = (\text{weight of methyl ethyl ketone insoluble part}) / \{(\text{weight of methyl ethyl ketone insoluble part}) + (\text{weight of methyl ethyl ketone soluble part})\} \times 100$$

(Variations of elastic body)

In an embodiment of the present invention, the "elastic body" of the fine polymer particles (B) may be composed of one type of elastic body which has an structural unit having identical composition. In such a case, the "elastic body" of the fine polymer particles (B) may be one selected from the group consisting of diene-based rubbers, (meth)acrylate-based rubbers, and organosiloxane-based rubbers.

In an embodiment of the present invention, the "elastic body" of the fine polymer particles (B) may be composed of a plurality of types of elastic bodies which differ in structural unit composition from each other. In such a case, the "elastic body" of the fine polymer particles (B) may be two or more types selected from the group consisting of diene-based rubbers, (meth)acrylate-based rubbers, and organosiloxane-based rubbers. In such a case, the "elastic body" of the fine polymer particles (B) may be one selected from the group consisting of diene-based rubbers, (meth)acrylate-based rubbers, and organosiloxane-based rubbers. In other words, the "elastic body" of the fine polymer particles (B) may be a plurality of types, which differ in structural unit composition from each other, of the following rubbers: diene-based rubbers, (meth)acrylate-based rubbers, and organosiloxane-based rubbers.

In an embodiment of the present invention, a case where the "elastic body" of the fine polymer particles (B) is composed of a plurality of types of elastic bodies which differ in structural unit composition from each other will be described. In this case, the plurality of types of elastic bodies will be referred to as an elastic body$_1$, an elastic body$_2$, ... and an elastic body$_n$, respectively. Note, here, that "n" is an integer of 2 or more. The "elastic body" of the fine polymer particles (B) may include a complex of the elastic body$_1$, the elastic body$_2$, ..., and the elastic body$_n$ which have been separately formed by polymerization. The "elastic body" of the fine polymer particles (B) may include one elastic body obtained by forming the elastic body$_1$, the elastic body$_2$, ..., and the elastic body$_n$ in order by polymerization. Forming a plurality of elastic bodies (polymers) by polymerization in order in this manner is also referred to as multistage polymerization. One elastic body obtained by multistage polymerization of a plurality of types of elastic bodies is also referred to as a multistage-polymerization elastic body. A method of producing a multistage-polymerization elastic body will be later described in detail.

A multistage-polymerization elastic body constituted by the elastic body$_1$, the elastic body$_2$, ... and the elastic body$_n$ will be described. In the multistage-polymerization elastic body, the elastic body$_n$ can cover at least part of an elastic body$_{n-1}$ or the whole of the elastic body$_{n-1}$. In the multistage-polymerization elastic body, part of the elastic body$_n$ may be located inside the elastic body$_{n-1}$.

In the multistage-polymerization elastic body, the plurality of elastic bodies may form a layer structure. For example, in a case where the multistage-polymerization elastic body is constituted by the elastic body$_1$, the elastic body$_2$, and an elastic body$_3$, aspects of the present invention also include an aspect in which the elastic body$_1$ forms the innermost layer, a layer of the elastic body$_2$ is formed on the outer side of the elastic body$_1$, and a layer of the elastic body$_3$ is formed on the outer side of the layer of the elastic body2 as the outermost layer of the elastic body. Thus, it can also be said that the multistage-polymerization elastic body in which the elastic bodies form a layer structure is a multilayered elastic body. In other words, in an embodiment of the present invention, the "elastic body" of the fine polymer particles (B) may include (a) a complex of a plurality of types of elastic bodies, (b) a multistage-polymerization elastic body, and/or (c) a multilayered elastic body.

(2-2-2. Graft part)

In the present specification, a polymer grafted to the elastic body is referred to as a graft part. The graft part contains a polymer that contains, as one or more structural units, one or more structural units derived from at least one type of monomer selected from the group consisting of aromatic vinyl monomers, vinyl cyanide monomers, and (meth)acrylate monomers.

The graft part has the above feature, and therefore can play various roles. The "various roles" are, for example, (a) improving compatibility between the epoxy resin (A) and the fine polymer particles (B), (b) improving the dispersibility of the fine polymer particles (B) in the epoxy resin (A), and (c) allowing the fine polymer particles (B) to be dispersed in the form of primary particles in an adhesive agent or in a cured product.

Specific examples of the aromatic vinyl monomers encompass styrene, $\alpha$-methylstyrene, p-methylstyrene, and divinylbenzene.

Specific examples of the vinyl cyanide monomers encompass acrylonitrile and methacrylonitrile.

Specific examples of the (meth)acrylate monomers encompass methyl (meth)acrylate, ethyl (meth)acrylate, butyl (meth)acrylate, hydroxyethyl (meth)acrylate, and hydroxybutyl (meth)acrylate.

The at least one type of monomer selected from the group consisting of aromatic vinyl monomers, vinyl cyanide monomers, and (meth)acrylate monomers may be used alone or in combination of two or more.

The graft part contains, as one or more structural units, structural unit(s) derived from aromatic vinyl monomer(s), structural unit(s) derived from vinyl cyanide monomer(s), and/or structural unit(s) derived from (meth)acrylate monomer(s) in an amount of preferably 10% by weight to 95% by weight in total, more preferably 30% by weight to 92% by weight in total, even more preferably 50% by weight to 90% by weight in total, particularly preferably 60% by weight to 87% by weight in total, most preferably 70% by weight to 85% by weight in total, with respect to 100% by weight (all) of the structural units.

The graft part preferably contains, as a structural unit, a structural unit derived from a monomer having a reactive group. The monomer having a reactive group is preferably a monomer having at least one type of reactive group selected from the group consisting of an epoxy group, an oxetane group, a hydroxy group, an amino group, an imide group, a carboxylic acid group, a carboxylic anhydride group, a cyclic ester, a cyclic amide, a benzoxazine group, and a cyanate ester group, and is more preferably a monomer having at least one type of reactive group selected from the group consisting of an epoxy group, a hydroxy group, and a carboxylic acid group, and is most preferably a monomer having an epoxy group. This feature makes it possible to allow the graft part of the fine polymer particles (B) and the epoxy resin (A) to be chemically bonded to each other in the adhesive agent. This makes it possible to keep the fine polymer particles (B) in a well dispersed state without allowing the fine polymer particles (B) to agglutinate in the adhesive agent or in an adhesive layer of the adhesive agent.

Specific examples of the monomer having epoxy group encompass glycidyl-group-containing vinyl monomers such as glycidyl (meth)acrylates, 4-hydroxybutyl (meth)acrylate glycidyl ethers, and allyl glycidyl ethers.

Specific examples of the monomer having hydroxy group encompass (a) hydroxy straight-chain alkyl (meth)acrylates (in particular, hydroxy straight chain C1-C6 alkyl(meth)acrylates) such as 2-hydroxyethyl (meth)acrylates, hydroxypropyl (meth)acrylates, and 4-hydroxybutyl (meth)acrylates, (b) caprolactone-modified hydroxy (meth)acrylates, (c) hydroxy branching alkyl (meth)acrylates such as $\alpha$-(hydroxymethyl) methyl acrylates and $\alpha$-(hydroxymethyl) ethyl acrylates, and (d) hydroxyl-group-containing (meth)acrylates such as mono (meth)acrylates of a polyester diol (particularly saturated polyester diol) obtained from a dicarboxylic acid (e.g. phthalic acid) and a dihydric alcohol (e.g. propylene glycol).

Specific examples of the monomer having a carboxylic acid group encompass: monocarboxylic acids such as acrylic acid, methacrylic acid, and crotonic acid; and dicarboxylic acids such as maleic acid, fumaric acid, and itaconic acid. Any of the monocarboxylic acids is suitably used as the monomer having a carboxylic acid group.

These monomers having reactive group(s) may be used alone or in combination of two or more.

The graft part contains structural unit(s) derived from monomer(s) having reactive group(s) in an amount of preferably 0.5% by weight to 90% by weight, more preferably 1% by weight to 50% by weight, even more preferably 2% by weight to 35% by weight, particularly preferably 3% by weight to 20% by weight, with respect to 100% by weight of the graft part. In a case where the graft part contains structural unit(s) derived from monomer(s) having reactive group(s) in an amount of not less than 0.5% by weight with respect to 100% by weight of the graft part, the resulting adhesive agent can provide a cured product which has sufficient impact resistance. In a case where the graft part contains structural unit(s) derived from monomer(s) having reactive group(s) in an amount of not more than 90% by weight with respect to 100% by weight of the graft part, the resulting adhesive agent has advantages that (i) the adhesive agent can provide a cured product which has sufficient impact resistance and (ii) the adhesive agent has favorable storage stability.

The structural unit(s) derived from the monomer(s) having reactive group(s) is preferably contained in the graft part, and more preferably contained only in the graft part.

The graft part may contain, as a structural unit, a structural unit derived from a polyfunctional monomer. In a case where the graft part contains a structural unit derived from a polyfunctional monomer, there are the following advantages, for example: (a) it is possible to prevent swelling of the fine polymer particles (B) in the adhesive agent; (b) since the adhesive agent has a low viscosity, the adhesive agent tends to have favorable handleability; and (c) the dispersibility of the fine polymer particles (B) in the epoxy resin (A) improves.

In a case where the graft part does not contain a structural unit derived from a polyfunctional monomer, the resulting adhesive agent can provide a cured product which has more excellent toughness and more excellent impact resistance, as compared to a case where the graft part contains a structural unit derived from a polyfunctional monomer.

Examples of a polyfunctional monomer which can be used to form the graft part by polymerization encompass the foregoing polyfunctional monomers. Out of such polyfunctional monomers, examples of a polyfunctional monomer which can be preferably used to form the graft part by polymerization encompass allyl methacrylate, butylene glycol di(meth)acrylate, ethylene glycol di(meth)acrylate, butanediol di(meth)acrylate, hexanediol di(meth)acrylate, cyclohexane dimethanol di(meth)acrylate, and polyethylene glycol di(meth)acrylates. The above-listed polyfunctional monomers may be used alone or in combination of two or more.

The graft part contains structural unit(s) derived from polyfunctional monomer(s) in an amount of preferably 1% by weight to 20% by weight, more preferably 5% by weight to 15% by weight, with respect to 100% by weight of the graft part.

In formation of the graft part by polymerization, the foregoing monomers may be used alone or in combination of two or more.

The graft part may contain, as a structural unit, a structural unit derived from another monomer, in addition to the structural unit(s) derived from the above-listed monomer(s).

(Glass transition temperature of graft part)

The graft part has a glass transition temperature of preferably not higher than 190°C, more preferably not higher than 160°C, more preferably not higher than 140°C, more preferably not higher than 120°C, more preferably not higher than 80°C, more preferably not higher than 70°C, more preferably not higher than 60°C, more preferably not higher than 50°C, more preferably not higher than 40°C, more preferably not higher than 30°C, more preferably not higher than 20°C, more preferably not higher than 10°C, more preferably not higher than 0°C, more preferably not higher than -20°C, more preferably not higher than -40°C, more preferably not higher than -45°C, more preferably not higher than -50°C, more preferably not higher than -55°C, more preferably not higher than -60°C, more preferably not higher than -65°C, more preferably not higher than -70°C, more preferably not higher than -75°C, more preferably not higher than -80°C, more preferably not higher than -85°C, more preferably not higher than -90°C, more preferably not higher than -95°C, more preferably not higher than -100°C, more preferably not higher than -105°C, more preferably not higher than -110°C, more preferably not higher than -115°C, even more preferably not higher than -120°C, particularly preferably not higher than -125°C.

The glass transition temperature of the graft part is preferably not lower than 0°C, more preferably not lower than 30°C, more preferably not lower than 50°C, more preferably not lower than 70°C, even more preferably not lower than 90°C, particularly preferably not higher than 110°C.

The Tg of the graft part can be determined by, for example, the composition of the structural unit contained in the graft part. In other words, it is possible to adjust the Tg of the resulting graft part by changing the composition of the monomer used to produce (form by polymerization) the graft part.

The Tg of the graft part can be obtained by carrying out viscoelasticity measurement with use of a planar plate made of fine polymer particles. Specifically, the Tg can be measured as follows: Specifically, the Tg can be measured as follows: (1) a graph of tan $\delta$ is obtained by carrying out dynamic viscoelasticity measurement with respect to a planar plate made of the fine polymer particles, with use of a dynamic viscoelasticity measurement device (for example, DVA-200, manufactured by IT Keisoku Seigyo Kabushikigaisha) under a tension condition; and (2) in the graph of tan $\delta$ thus obtained, the peak temperature of tan $\delta$ is regarded as the glass transition temperature. Note, here, that in a case where a plurality of peaks are found in the graph of tan $\delta$, the highest peak temperature is regarded as the glass transition temperature of the graft part.

(Graft rate of graft part)

In an embodiment of the present invention, a polymer which is identical in composition to the graft part and which is not grafted to the elastic body (also referred to as a "non-grafted polymer") may be produced during production of the fine polymer particles (B). The polymer may have a structure identical to or different from that of the non-crosslinked acrylic resin (C).

In a case where the polymer (non-grafted polymer) has a structure identical to that of the non-crosslinked acrylic resin (C), the non-crosslinked acrylic resin (C) contained in the adhesive agent in accordance with an embodiment of the present invention may be (i) a non-crosslinked acrylic resin derived only from the polymer or may be (ii) a mixture of (a) the polymer and (b) a polymer (non-grafted polymer) different in derivation from (a) the polymer.

The polymer (non-grafted polymer) which has a structure different from that of the non-crosslinked acrylic resin (C) can be considered to constitute a part of the fine polymer particles (B) in accordance with an embodiment of the present invention. In contrast, the polymer (non-grafted polymer) which has a structure identical to that of the non-crosslinked acrylic resin (C) is not considered to constitute a part of the fine polymer particles (B) in accordance with an embodiment of the present invention.

In the present specification, the proportion of (i) the polymer which is grafted to the elastic body to (ii) the polymers produced during the formation of the graft part by polymerization, i.e., the proportion of the graft part, is referred to as a "graft rate". In other words, the graft rate is a value represented by the following expression: (weight of graft part) / {(weight of graft part) + (weight of non-grafted polymer)} $\times$ 100.

The graft rate of the graft part is preferably not less than 70%, more preferably not less than 80%, even more preferably not less than 90%. In a case where the graft rate is not less than 70%, there is an advantage that the viscosity of the adhesive agent does not become too high.

In the present specification, the graft rate is calculated by the following method. First, an aqueous latex containing the fine polymer particles (B) is obtained. Next, a powdery and/or granular material of the fine polymer particles (B) is obtained from the aqueous latex. A specific example of a method of obtaining the powdery and/or granular material of the fine polymer particles (B) from the aqueous latex is a method of obtaining the powdery and/or granular material of the fine polymer particles (B) by (i) causing the fine polymer particles (B) in the aqueous latex to coagulate, (ii) dehydrating the coagulate thus obtained, and (iii) further drying the coagulate. Next, 2 g of the powdery and/or granular material of the fine polymer particles (B) is dissolved in 50 mL of methyl ethyl ketone (MEK). The MEK solution of the powder thus obtained is separated into a part soluble in MEK (MEK-soluble part) and a part insoluble in MEK (MEK-insoluble part). Specifically, the obtained MEK solution of the powder is subjected to centrifugal separation with use of a centrifugal separator (CP60E, manufactured by Hitachi Koki Co., Ltd.) at 30000 rpm for 1 hour, and thereby separated into the MEK-soluble part and the MEK-insoluble part. Note, here, that three sets of centrifugal separations are carried out in total. Next, 20 ml of the concentrated MEK-soluble part is mixed with 200 ml of methanol. An aqueous calcium chloride solution in which 0.01 g of calcium chloride is dissolved in water is added to the obtained mixture, and the mixture thus obtained is stirred for 1 hour. After that, the obtained mixture is separated into a methanol-soluble part and a methanol-insoluble part. The weight of the methanol-insoluble part is used as the amount of a free polymer (FP).

The graft rate is calculated with use of the following expression.

$$\text{Graft rate (\%)} = 100 - [(\text{amount of FP})/\{(\text{amount of FP}) + (\text{weight of MEK-insoluble part})\}]/(\text{weight of polymer of graft part}) \times 10000$$

Note that the weight of a polymer other than the graft part is the amount of monomer introduced for formation of the polymer other than the graft part. The polymer other than the graft part is, for example, the elastic body. In a case where the fine polymer particles (B) contain a surface-crosslinked polymer (described later), the polymer other than the graft part includes both the elastic body and the surface-crosslinked polymer. The weight of the polymer of the graft part is the amount of monomer introduced for formation of the polymer of the graft part. In calculation of the graft rate, a method of causing the fine polymer particles (B) to coagulate is not limited to any particular one, and a method in which a solvent is used, a method in which a coagulant is used, a method in which the aqueous latex is sprayed, or the like can be employed.

(Variations of graft part)

In an embodiment of the present invention, the graft part may be constituted by only one type of graft part which has a structural unit having identical composition. In an embodiment of the present invention, the graft part may be constituted by a plurality of types of graft parts which have structural units different from each other in composition.

A case where the graft part is constituted by a plurality of types of graft parts in an embodiment of the present invention will be described. In this case, the plurality of types of graft parts will be referred to as a graft parti, a graft part$_2$, ... a graft part$_n$ ("n" is an integer of 2 or more). The graft part may include a complex of the graft parti, the graft part$_2$, ..., and the graft part$_n$ which are separately formed by polymerization. The graft part may include a polymer obtained by forming the graft parti, the graft part2, ..., and the graft part$_n$ by multistage polymerization. A polymer obtained by multistage polymerization of a plurality of types of graft parts is also referred to as a multistage-polymerization graft part. A method of producing a multistage-polymerization graft part will be later described in detail.

In a case where the graft part is constituted by the plurality of types of graft parts, all of the plurality of types of graft parts do not need to be grafted to the elastic body. It is only necessary that at least part of at least one of the plurality of types of graft parts be grafted to the elastic body. The other of the plurality of types of graft parts (the other types of graft parts) may be grafted to the at least one of the plurality of types of graft parts which is grafted to the elastic body. In a case where the graft part is constituted by the plurality of types of graft parts, the graft part may have a plurality of types of polymers which are identical in composition to the plurality of types of graft parts and which are not grafted to the elastic body (plurality of types of non-grafted polymers).

The multistage-polymerization graft part constituted by the graft parti, the graft part2, ..., and the graft part$_n$ will be described. In the multistage-polymerization graft part, the graft part$_n$ can cover at least part of a graft part$_{n-1}$ or the whole of the graft part$_{n-1}$. In the multistage-polymerization graft part, part of the graft part$_n$ may be located inside the graft part$_{n-1}$.

In the multistage-polymerization graft part, the graft parts may form a layer structure. For example, in a case where the multistage-polymerization graft part is constituted by the graft parti, the graft part2, and a graft part$_3$, aspects of the present invention also include an aspect in which the graft part$_1$ forms the innermost layer of the graft part, a layer of the graft part2 is formed on the outer side of the graft parti, and a layer of the graft part3 is formed on the outer side of the layer of the graft part$_2$ as the outermost layer. Thus, it can also be said that the multistage-polymerization graft part in which the graft parts form a layer structure is a multilayered graft part. In other words, in an embodiment of the present invention, the graft part may include (a) a mixture of plurality of types of graft parts, (b) a multistage-polymerization graft part, and/or (c) a multilayered graft part.

In a case where the elastic body and the graft part are formed in this order by polymerization in production of the fine polymer particles (B), at least part of the graft part can cover at least part of the elastic body in the resulting fine polymer particles (B). The wording "the elastic body and the graft part are formed in this order by polymerization" can be reworded as follows: the elastic body and the graft part are subjected to multistage polymerization. It can also be said that the fine polymer particles (B) obtained by multistage polymerization of the elastic body and the graft part are a multistage polymer.

In a case where the fine polymer particles (B) are constituted by a multistage polymer, the graft part can cover at least part of the elastic body or the whole of the elastic body. In a case where the fine polymer particles (B) are constituted by a multistage polymer, part of the graft part may be located inside the elastic body.

In a case where the fine polymer particles (B) are constituted by a multistage polymer, the elastic body and the graft part may form a layer structure. For example, aspects of the present invention also include an aspect in which the elastic body forms the innermost layer (also referred to as a core layer) and a layer of the graft part is formed on the outer side of the elastic body as the outermost layer (also referred to as a shell layer). It can also be said that a structure in which the elastic body is present as a core layer and the graft part is present as a shell layer is a core-shell structure. It can also be said that the fine polymer particles (B) that contain the elastic body and the graft part which form a layer structure (core-shell structure) are constituted by a multilayered polymer or a core-shell polymer. In other words, in an embodiment of the present invention, the fine polymer particles (B) may be constituted by a multistage polymer and/or a multilayered polymer or a core-shell polymer. Note, however, that the fine polymer particles (B) are not limited to the above feature, provided that the graft part is grafted to the elastic body.

At least part of the graft part preferably covers at least part of the elastic body. In other words, at least part of the graft part is preferably present on the outermost side of the fine polymer particles (B).

(2-2-3. Surface-crosslinked polymer)

The rubber-containing graft copolymer preferably further has a surface-crosslinked polymer in addition to the elastic body and the graft part grafted to the elastic body. In other words, the fine polymer particles (B) preferably further have a surface-crosslinked polymer in addition to the elastic body and the graft part grafted to the elastic body. An embodiment of the present invention will be described with reference to an example case in which the fine polymer particles (B) (e.g., rubber-containing graft copolymer) further has a surface-crosslinked polymer. In this case, the following advantages are achieved: (a) an anti-blocking property can be improved in the production of the fine polymer particles (B); and (b) the dispersibility of the fine polymer particles (B) in the epoxy resin (A) becomes more favorable in the adhesive agent. Reasons for these are not limited to any particular ones, but can be inferred as follows. By the surface-crosslinked polymer covering at least part of the elastic body, the exposed area of the elastic body of the fine polymer particles (B) is reduced. Consequently, the elastic body is less likely to adhere to another elastic body, and therefore the dispersibility of the fine polymer particles (B) is improved.

In a case where the fine polymer particles (B) further have the surface-crosslinked polymer, the following effects can be further brought about: (a) an effect of reducing the viscosity of the resulting adhesive agent; (b) an effect of increasing the crosslinking density of the elastic body; and (c) an effect of increasing the graft efficiency of the graft part. Note that the crosslinking density of the elastic body means a degree of the number of crosslinked structures in the entirety of the elastic body.

The surface-crosslinked polymer is constituted by a polymer containing, as structural units, (i) a structural unit(s) derived from a polyfunctional monomer(s) in an amount of 30% by weight to 100% by weight and (ii) a structural unit(s) derived from vinyl-based monomer(s), other than the structural unit(s) derived from polyfunctional monomer(s), in an amount of 0% by weight to 70% by weight, which total 100% by weight.

Examples of the polyfunctional monomer which can be used to form the surface-crosslinked polymer by polymerization encompass the foregoing polyfunctional monomers. Out of such polyfunctional monomers, examples of a polyfunctional monomer which can be preferably used to form the surface-crosslinked polymer by polymerization encompass allyl methacrylate, ethylene glycol di(meth)acrylate, butylene glycol di(meth)acrylate (such as 1,3-butylene glycol dimethacrylate), butanediol di(meth)acrylate, hexanediol di(meth)acrylate, cyclohexane dimethanol di(meth)acrylate, and polyethylene glycol di(meth)acrylates. The above-listed polyfunctional monomers may be used alone or in combination of two or more.

The fine polymer particles (B) may contain the surface-crosslinked polymer which is formed by polymerization independently of formation of the rubber-containing graft copolymer by polymerization, or may contain the surface-crosslinked polymer which is formed together with the rubber-containing graft copolymer by polymerization. The fine polymer particles (B) may be a multistage polymer obtained by forming the elastic body, the surface-crosslinked polymer, and the graft part in this order by multistage polymerization. In any of these aspects, the surface-crosslinked polymer can cover at least part of the elastic body.

The surface-crosslinked polymer can also be regarded as part of the elastic body. In other words, the surface-crosslinked polymer can also be regarded as part of the rubber-containing graft copolymer, and can be said to be a surface cross-linked polymerized part. In B case where the fine polymer particles (B) contain the surface-crosslinked polymer, the graft part may (a) be grafted to the elastic body other than the surface-crosslinked polymer, (b) be grafted to the surface-crosslinked polymer, or (c) be grafted to both the elastic body other than the surface-crosslinked polymer and the surface-crosslinked polymer. In a case where the fine polymer particles (B) contain the surface-crosslinked polymer, the above-described volume-average particle size of the elastic body means the volume-average particle size of the elastic body including the surface-crosslinked polymer.

A case will be described where the fine polymer particles (B) are a multistage polymer obtained by forming the elastic body, the surface-crosslinked polymer, and the graft part in this order by multistage polymerization (case D). In the case D, the surface-crosslinked polymer can cover part of the elastic body or the whole of the elastic body. In the case D, part of the surface-crosslinked polymer may be located inside the elastic body. In the case D, the graft part can cover part of the surface-crosslinked polymer or the whole of the surface-crosslinked polymer. In the case D, part of the graft part may be located inside the surface-crosslinked polymer. In the case D, the elastic body, the surface-crosslinked polymer, and the graft part may form a layer structure. For example, aspects of the present invention also include an aspect in which the elastic body is present as the innermost layer (core layer), a layer of the surface-crosslinked polymer is present on the outer side of the elastic body as an intermediate layer, and a layer of the graft part is present on the outer side of the surface-crosslinked polymer as the outermost layer (shell layer).

(2-2-4. Physical properties of fine polymer particles (B))

The following description will discuss physical properties of the fine polymer particles (B).

(Volume-average particle size (Mv) of fine polymer particles (B))

The volume-average particle size (Mv) of the fine polymer particles (B) is preferably 0.03 $\mu$m to 50.00 $\mu$m, more preferably 0.05 $\mu$m to 10.00 $\mu$m, more preferably 0.08 $\mu$m to 2.00 $\mu$m, further preferably 0.10 $\mu$m to 1.00 $\mu$m, even more preferably 0.10 $\mu$m to 0.80 $\mu$m, particularly preferably 0.10 $\mu$m to 0.50 $\mu$m, because it is possible to obtain an adhesive agent which has a desired viscosity and which is highly stable. In a case where the volume-average particle size (Mv) of the fine polymer particles (B) falls within the above range, there is also an advantage that the dispersibility of the fine polymer particles (B) in the epoxy resin (A) is favorable. Note that, in the present specification, the "volume-average particle size (Mv) of the fine polymer particles (B)" means the volume-average particle size of the primary particles of the fine polymer particles (B) unless otherwise mentioned. The volume-average particle size of the fine polymer particles (B) can be measured with use of a dynamic light scattering type particle size distribution measurement apparatus using, as a test specimen, an aqueous latex containing the fine polymer particles (B). The volume-average particle size of the fine polymer particles (B) can also be measured by (i) cutting an adhesive layer, (ii) capturing an image of a cut surface with use of an electron microscope or the like, and (iii) using image data thus obtained (captured image).

The particle-number-based distribution of the volume-average particle size of the fine polymer particles (B) in the epoxy resin (A) preferably has a full width at half maximum which is not less than 0.5 times and not more than 1 time the volume-average particle size, because the adhesive agent which has a low viscosity and is easy to handle is obtained.

(Glass transition temperature of fine polymer particles (B))

The glass transition temperature of the fine polymer particles (B) is preferably not higher than 80°C, more preferably not higher than 70°C, more preferably not higher than 60°C, more preferably not higher than 50°C, more preferably not higher than 40°C, more preferably not higher than 30°C, more preferably not higher than 20°C, more preferably not higher than 10°C, more preferably not higher than 0°C, more preferably not higher than -20°C, more preferably not higher than -40°C, more preferably not higher than -45°C, more preferably not higher than -50°C, more preferably not higher than -55°C, more preferably not higher than -60°C, more preferably not higher than -65°C, more preferably not higher than -70°C, more preferably not higher than -75°C, more preferably not higher than -80°C, more preferably not higher than -85°C, more preferably not higher than -90°C, more preferably not higher than -95°C, more preferably not higher than -100°C, more preferably not higher than -105°C, more preferably not higher than -110°C, more preferably not higher than -115°C, even more preferably not higher than -120°C, particularly preferably not higher than -125°C. With this feature, it is possible to obtain an adhesive agent having a low glass transition temperature (Tg). As a result, the adhesive agent can provide an adhesive layer which has excellent toughness. Furthermore, the adhesive agent can have a lower viscosity.

The glass transition temperature (Tg) of the fine polymer particles (B) can be determined by, for example, the composition of the structural unit contained in the elastic body contained in the fine polymer particles (B) and/or the composition of the structural unit contained in the graft part contained in the fine polymer particles (B). In other words, it is possible to adjust the glass transition temperature (Tg) of the resulting fine polymer particles (B) by changing the composition of monomer used to produce (form by polymerization) the fine polymer particles (B).

The glass transition temperature (Tg) of the fine polymer particles (B) can be measured by a publicly known method. For example, a graph of tan $\delta$ is obtained by carrying out dynamic viscoelasticity measurement with respect to a planar plate made of the fine polymer particles (B), with use of a dynamic viscoelasticity measurement device DVA-200 (IT Keisoku Seigyo Kabushikigaisha) under a tension condition. In the graph of tan $\delta$ thus obtained, the peak temperature of tan $\delta$ may be regarded as the glass transition temperature. In a case where two peaks are found in the graph of tan $\delta$, a lower peak temperature may be regarded as the glass transition temperature of the fine polymer particles (B). That is, the glass transition temperature of the fine polymer particles (B) can also be referred to as a glass transition temperature of the elastic body (described earlier).

(2-2-5. Method of producing fine polymer particles (B))

The fine polymer particles (B) can be produced as follows: after an elastic body is formed by polymerization, the polymer which constitutes the graft part is graft polymerized to the elastic body in the presence of the elastic body.

The fine polymer particles (B) can be produced by a known method, for example, a method such as emulsion polymerization, suspension polymerization, or microsuspension polymerization. Specifically, the formation of the elastic body by polymerization in the fine polymer particles (B), the formation of the graft part by polymerization in the fine polymer particles (B) (graft polymerization), and the formation of the surface-crosslinked polymer by polymerization in the fine polymer particles (B) can be each achieved by a known method, for example, a method such as emulsion polymerization, suspension polymerization, or microsuspension polymerization. Out of these methods, emulsion polymerization is particularly preferable as the method of producing the fine polymer particles (B). Emulsion polymerization has the following advantages: it facilitates (a) compositional design of the fine polymer particles (B), (b) industrial production of the fine polymer particles (B), and (c) obtainment of the aqueous latex of the fine polymer particles (B) which can be suitably used to produce an adhesive agent. A method of producing the elastic body which can be contained in the fine polymer particles (B), a method of producing the graft part which can be contained in the fine polymer particles (B), and a method of producing the surface-crosslinked polymer which can be optionally contained in the fine polymer particles (B) will be described below.

(Method of producing elastic body)

A case will be considered where the elastic body includes at least one type of elastic body selected from the group consisting of diene-based rubbers and (meth)acrylate-based rubbers. In this case, the elastic body can be produced by, for example, a method such as emulsion polymerization, suspension polymerization, or microsuspension polymerization. As the method of producing the elastic body, a method disclosed in, for example, WO 2005/028546 can be used.

A case where the elastic body includes an organosiloxane-based rubber will be described. In this case, the elastic body can be produced by, for example, a method such as emulsion polymerization, suspension polymerization, or microsuspension polymerization. As the method of producing the elastic body, a method disclosed in, for example, WO 2006/070664 can be used.

A case where the "elastic body" of the fine polymer particles (B) is constituted by a plurality of types of elastic bodies (for example, an elastic body$_1$, an elastic body$_2$, ..., an elastic body$_n$) will be described. In this case, a complex which is constituted by the plurality of types of elastic bodies may be produced in the following manner: the elastic body$_1$, the elastic body$_2$, ... and the elastic body$_n$ are each formed by polymerization individually by any of the above-described methods, and then these elastic bodies are mixed and complexed. Alternatively, the elastic body$_1$, the elastic body$_2$, ... and the elastic body$_n$ may be formed in order by multistage polymerization to produce one elastic body which is constituted by the plurality of types of elastic bodies.

The multistage polymerization of the elastic bodies will be described in detail. For example, the multistage-polymerization elastic body can be obtained by carrying out in order the following steps (1) through (4): (1) The elastic body$_1$ is formed by polymerization; (2) next, the elastic body$_2$ is formed by polymerization in the presence of the elastic body$_1$ to obtain a two-stage elastic body$_{1+2}$; (3) subsequently, an elastic body$_3$ is formed by polymerization in the presence of the elastic body$_{1+2}$ to obtain a three-stage elastic body$_{1+2+3}$; and (4) after a similar process(es) is/are carried out, the elastic body$_n$ is formed by polymerization in the presence of an elastic body$_{1+2+ \ldots +(n-1)}$ to obtain a multistage-polymerization elastic body$_{1+2+ \ldots +n}$.

(Method of producing graft part)

The graft part can be formed, for example, by polymerizing, by known radical polymerization, the monomer used to form the graft part. In a case where (a) the elastic body is obtained as an aqueous latex or (b) a fine polymer particle precursor containing the elastic body and the surface-crosslinked polymer is obtained as an aqueous latex, the graft part is preferably formed by emulsion polymerization. The graft part can be produced by a method disclosed in, for example, WO 2005/028546.

The method of producing the graft part in a case where the graft part is constituted by a plurality of types of graft parts (for example, a graft parti, a graft part$_2$, ..., a graft part$_n$) will be described. In this case, the graft part (complex) which is constituted by the plurality of types of graft parts may be produced in the following manner: the graft parti, the graft part$_2$, ... and the graft part$_n$ are each formed by polymerization individually by any of the above-described methods, and then these graft parts are mixed and complexed. Alternatively, the graft parti, the graft part2, ... the graft part$_n$ may be formed in order by multistage polymerization to produce one graft part which is constituted by the plurality of types of graft parts.

The multistage polymerization of the graft parts will be described in detail. For example, the multistage-polymerization graft part can be obtained by carrying out in order the following steps (1) through (4): (1) The graft parti is formed by polymerization; (2) next, the graft part$_2$ is formed by polymerization in the presence of the graft parti to obtain a two-stage graft part$_{1+2}$; (3) subsequently, a graft part$_3$ is formed by polymerization in the presence of the graft part$_{1+2}$ to obtain a three-stage graft part$_{1+2+3}$; and (4) after a similar process(es) is/are carried out, the graft part$_n$ is formed by polymerization in the presence of a graft parti+2+ ... $_{+(n-1)}$ to obtain a multistage-polymerization graft part$_{1+2+ ... +n}$.

In a case where the graft part is constituted by the plurality of types of graft parts, the fine polymer particles (B) may be produced as follows: the graft part which is constituted by the plurality of types of graft parts is formed by polymerization, and then these graft parts are graft polymerized to the elastic body. The fine polymer particles (B) may be produced as follows: in the presence of the elastic body, a plurality of types of polymers which constitute the graft part are formed in order by multistage graft polymerization with respect to the elastic body.

(Method of producing surface-crosslinked polymer)

The surface-crosslinked polymer can be formed by polymerizing, by known radical polymerization, the monomer used to form the surface-crosslinked polymer. In a case where the elastic body is obtained as an aqueous latex, the surface-crosslinked polymer is preferably formed by emulsion polymerization.

In a case where emulsion polymerization is employed as the method of producing the fine polymer particles (B), a known emulsifying agent (dispersion agent) can be used in the production of the fine polymer particles (B).

Examples of the emulsifying agent encompass anionic emulsifying agents, nonionic emulsifying agents, polyvinyl alcohols, alkyl-substituted celluloses, polyvinylpyrrolidone, polyacrylic acid derivatives, and the like. Examples of the anionic emulsifying agent encompass sulfur-based emulsifying agents, phosphorus-based emulsifying agents, sarcosine acid-based emulsifying agents, carboxylic acid-based emulsifying agents, and the like. Examples of the sulfur-based emulsifying agent encompass sodium dodecylbenzenesulfonate (abbreviated as SDBS), and the like. Examples of the phosphorus-based emulsifying agent encompass sodium polyoxyethylene lauryl ether phosphate and the like.

In a case where emulsion polymerization is employed as the method of producing the fine polymer particles (B), a pyrolytic initiator can be used in the production of the fine polymer particles (B). It is possible to use, as the pyrolytic initiator, a known initiator such as (a) 2,2'-azobisisobutyronitrile, and (b) peroxides such as organic peroxides and inorganic peroxides, for example. Examples of the organic peroxide encompass t-butylperoxy isopropyl carbonate, paramenthane hydroperoxide, cumene hydroperoxide, dicumyl peroxide, t-butyl hydroperoxide, dit-butyl peroxide, and t-hexyl peroxide. Examples of the inorganic peroxide encompass hydrogen peroxide, potassium persulfate, and ammonium persulfate.

In the production of the fine polymer particles (A), a redox initiator can also be used. The redox initiator is an initiator which contains a combination of (a) a peroxide such as an organic peroxide and/or an inorganic peroxide and (b) a reducing agent such as a transition metal salt (such as iron (II) sulfate), sodium formaldehyde sulfoxylate and/or glucose. Further, as necessary, a chelating agent such as disodium ethylenediaminetetraacetate, and/or as necessary a phosphorus-containing compound such as sodium pyrophosphate may be used in combination.

Using the redox initiator makes it possible to (i) carry out polymerization even at a low temperature at which pyrolysis of the peroxide substantially does not occur and (ii) select a polymerization temperature from a wide range of temperatures. Thus, using the redox initiator is preferable. Out of redox initiators, redox initiators in which organic peroxides such as cumene hydroperoxide, dicumyl peroxide, paramenthane hydroperoxide, and t-butyl hydroperoxide are used as peroxides are preferable. The amount of the initiator used can be within a known range. In a case where the redox initiator is used, the amounts of, for example, the reducing agent used, the transition metal salt used, and the chelating agent used can be within known ranges.

In a case where, in the formation of the elastic body, the graft part, or the surface-crosslinked polymer by polymerization, a polyfunctional monomer is used to introduce a crosslinked structure into the elastic body, the graft part, or the surface-crosslinked polymer, a known chain transfer agent can be used in an amount within a known range. By using the chain transfer agent, it is possible to easily adjust the molecular weight and/or the degree of crosslinking of the resulting elastic body, the resulting graft part, or the resulting surface-crosslinked polymer.

In the production of the fine polymer particles (B), a surfactant can be further used, in addition to the above-described components. The type and the amount of the surfactant used are set within known ranges.

In the production of the fine polymer particles (B), conditions of polymerization such as polymerization temperature, pressure, and deoxygenation can be, as appropriate, conditions within known numerical ranges.

(2-3. Non-crosslinked acrylic resin (C))

The non-crosslinked acrylic resin (C) may be a non-crosslinked acrylic-based polymer. The acrylic-based polymer is a polymer that contains, as a main component, a structural unit derived from an acrylic ester monomer and/or a methacrylate ester monomer. "A structural unit derived from an acrylic ester monomer and/or a methacrylate ester monomer" can also be referred to as "a structural unit derived from an acrylic ester monomer and/or a methacrylate ester monomer".

The ester portion of the acrylic ester monomer preferably has 1 to 20 carbon atoms. The ester portion of the methacrylate ester monomer preferably has 1 to 20 carbon atoms. Examples of the acrylic-based polymer encompass: (a) homopolymers each obtained from an acrylic ester monomer; (b) homopolymers each obtained from a methacrylate ester monomer; and (c) copolymers of (i) an acrylic ester monomer and/or a methacrylate ester monomer and (ii) (a) a monomer such as an unsaturated fatty acid, an acrylamide-based monomer, a maleimide-based monomer, or vinyl acetate or (b) a vinyl-based copolymer (such copolymers hereinafter may also be referred to as acrylic-based copolymers).

Examples of the acrylic ester monomer or the methacrylate ester monomer encompass methyl acrylate (MA), ethyl acrylate (EA), 2-ethylhexyl acrylate (2EHA), acrylic acid (AA), methacrylic acid (MAA), 2-hydroxyethyl acrylate (2HEA), 2-hydroxyethyl methacrylate (2HEMA), butyl acrylate (BA), methyl methacrylate (MMA), ethyl methacrylate (EMA), n-butyl methacrylate (nBMA), isobutyl methacrylate (iBMA), propyl acrylate, isopropyl acrylate, isobutyl acrylate, t-butyl acrylate, neopentyl acrylate, isodecyl acrylate, lauryl acrylate, tridecyl acrylate, stearyl acrylate, cyclohexyl acrylate, isobornyl acrylate, tricyclodecynyl acrylate, hydroxyethyl acrylate, hydroxybutyl acrylate, hydroxypropyl acrylate, hydroxyethyl acrylate, 2-methoxyethyl acrylate, dimethylaminoethyl acrylate, chloroethyl acrylate, tryfluoroethyl acrylate, and tetrahydrofurfuryl acrylate. These may be used alone or in combination of two or more.

In an acrylic-based copolymer, the ratio between (i) a structural unit (structural unit (a)) derived from the acrylic ester monomer and/or the methacrylate ester monomer and (ii) structural unit(s) (structural unit (b)) derived from monomer(s) such as unsaturated fatty acid, acrylamide-based monomer, maleimide-based monomer, or vinyl acetate or from the vinyl-based copolymer is preferably as follows: the structural unit (a) is 50% by weight to 100% by weight; and the structural unit (b) is 0% by weight to 50% by weight.

The acrylic-based polymer contains a structural unit derived from butyl acrylate (BA) in an amount of preferably not less than 50% by weight, more preferably not less than 60% by weight, even more preferably not less than 70% by weight, particularly preferably not less than 80% by weight, most preferably not less than 90% by weight.

The vinyl-based copolymer is obtained by copolymerizing a vinyl-based monomer mixture containing at least one type selected from the group consisting of aromatic vinyl-based monomers, vinyl cyanide-based monomers, and/or unsaturated alkyl carboxylate ester-based monomers. The vinyl-based monomer mixture may further contain some other monomer (which is hereinafter also referred to as "monomer C") that is copolymerizable with the vinyl-based monomer(s) of which the foregoing group consists.

Examples of the aromatic vinyl-based monomers encompass styrene, α-methylstyrene, o-methylstyrene, m-methylstyrene, p-methylstyrene, t-butylstyrene, and vinyltoluene. These vinyl-based monomers may be used alone or in combination of two or more. Out of those listed above, styrene is preferable in that styrene makes it possible to easily increase refractive index.

The unsaturated alkyl carboxylate ester-based monomer is not particularly limited. The unsaturated alkyl carboxylate ester-based monomer is preferably, for example, an ester of a C1 to C6 alcohol and acrylic acid or methacrylic acid. The ester of a C1 to C6 alcohol and acrylic acid or methacrylic acid may further contain a substituent such as a hydroxy group or a halogen group.

Examples of the ester of a C1 to C6 alcohol and acrylic acid or methacrylic acid encompass methyl (meth)acrylate, ethyl (meth)acrylate, n-propyl (meth)acrylate, n-butyl (meth)acrylate, t-butyl (meth)acrylate, n-hexyl (meth)acrylate, cyclohexyl (meth)acrylate, chloromethyl (meth)acrylate, 3-hydroxypropyl (meth)acrylate, 2,3,4,5,6-pentahydroxyhexyl (meth)acrylate, and 2,3,4,5-tetrahydroxypentyl (meth)acrylate. These may be used alone or in combination of two or more.

Examples of the vinyl cyanide-based monomers encompass acrylonitrile, methacrylonitrile, and ethacrylonitrile. These may be used alone or in combination of two or more.

The monomer C is not particularly limited, provided that the monomer C is a vinyl-based monomer other than the foregoing aromatic vinyl-based monomer, the foregoing unsaturated alkyl carboxylate ester-based monomer, and the foregoing vinyl cyanide-based monomer and does not impair the effects of the present invention. Specific examples of the monomer C encompass unsaturated fatty acids, acrylamide-based monomers, maleimide-based monomers, vinyl acetate, and acrylic ester monomers. These may be used alone or in combination of two or more.

An unsaturated fatty acid can be selected from, for example, itaconic acid, maleic acid, fumaric acid, butenoic acid, acrylic acid, methacrylic acid, and the like.

An acrylamide-based monomer can be selected from, for example, acrylamide, methacrylamide, N-methylacrylamide, and the like.

A maleimide-based monomer can be selected from, for example, N-methylmaleimide, N-ethylmaleimide, N-isopropylmaleimide, N-butylmaleimide, N-hexylmaleimide, N-octylmaleimide, N-dodecylmaleimide, N-cyclohexylmaleimide, N-phenylmaleimide, and the like.

A method of producing the vinyl-based copolymer is not particularly limited, and is, for example, emulsion polymerization, suspension polymerization, mass polymerization, solution polymerization, or the like.

The method of producing the vinyl-based copolymer may involve using a polymerization initiator as necessary. The polymerization initiator can be at least one appropriately selected from the group consisting of, for example, peroxides, azo-based compounds, potassium persulfate, and the like. The amount of the polymerization initiator added is not particularly limited.

Examples of peroxides encompass benzoyl peroxide, cumene hydroperoxide, dicumyl peroxide, diisopropylbenzene hydroperoxide, t-butylhydroperoxide, t-butyl peroxyacetate, t-butyl peroxybenzoate, t-butyl isopropyl carbonate, di-t-butyl peroxide, t-butyl peroctoate, 1,1-bis(t-butylperoxy)3,3,5-trimethylcyclohexane, 1,1- bis(t-butylperoxy)cyclohexane, and t-butylperoxy-2-ethylhexanoate. Out of those listed above, cumene hydroperoxide, 1,1-bis(t-butylperoxy)3,3,5-trimethylcyclohexane, and 1,1-bis(t-butylperoxy)cyclohexane are particularly preferred.

Examples of azo-based compounds encompass azobisisobutyronitrile, azobis(2,4-dimethylvaleronitrile), 2-phenyl azo-2,4-dimethyl-4-methoxyvaleronitrile, 2-cyano-2-propylazoformamide, 1,1'-azobiscyclohexane-1-carbonitrile, azobis(4-methoxy-2,4-dimethylvaleronitrile), dimethyl 2,2'-azobisisobutyrate, 1-t-butyl azo-2-cyanobutane, and 2-t-butyl azo-2-cyano-4-methoxy-4-methylpentane. Out of those listed above, 1,1'-azobiscyclohexane-1-carbonitrile is particularly preferred.

Specific examples of the vinyl-based copolymer encompass polyvinyl chloride, chlorinated polyvinyl chloride, polystyrene, styrene-acrylonitrile copolymers, styrene-acrylonitrile-N-phenylmaleimide copolymers, α-methylstyrene-acrylonitrile copolymers, poly(methyl methacrylate), and methyl methacrylate-styrene copolymers. These may be used alone or in combination of two or more.

The present adhesive agent contains the non-crosslinked acrylic resin (C) in an amount of more preferably 1 part by mass to 100 parts by mass, more preferably 1 part by mass to 50 parts by mass, more preferably 1 part by mass to 30 parts by mass, 1 part by mass to 20 parts by mass, more preferably 1 part by mass to 10 parts by mass, most preferably 1 part by mass to 5 parts by mass, with respect to 100 parts by mass of the epoxy resin (A). The adhesive agent that contains the non-crosslinked acrylic resin (C) in a larger amount can have a more favorable peeling form.

In a case where 100% by weight represents the total amount of the fine polymer particles (B) and the non-crosslinked acrylic resin (C), it is (i) preferable that the fine polymer particles (B) be contained in an amount of 50% by weight to 99% by weight and the non-crosslinked acrylic resin (C) be contained in an amount of 1% by weight to 50% by weight, (ii) more preferable that the fine polymer particles (B) be contained in an amount of 70% by weight to 99% by weight and the non-crosslinked acrylic resin (C) be contained in an amount of 1% by weight to 30% by weight, (iii) more preferable that the fine polymer particles (B) be contained in an amount of 80% by weight to 99% by weight and the non-crosslinked acrylic resin (C) be contained in an amount of 1% by weight to 20% by weight, (iv) more preferable that the fine polymer particles (B) be contained in an amount of 90% by weight to 99% by weight and the non-crosslinked acrylic resin (C) be contained in an amount of 1% by weight to 10% by weight, (v) most preferable that the fine polymer particles (B) be contained in an amount of 95% by weight to 99% by weight and the non-crosslinked acrylic resin (C) be contained in an amount of 1% by weight to 5% by weight. According to the above feature, it is possible to achieve a more favorable peeling form.

In a case where 100% by weight represents the total amount of the fine polymer particles (B) and the non-crosslinked acrylic resin (C), it is (i) preferable that the fine polymer particles (B) be contained in an amount of 50% by weight to 95% by weight and the non-crosslinked acrylic resin (C) be contained in an amount of 5% by weight to 50% by weight, (ii) more preferable that the fine polymer particles (B) be contained in an amount of 50% by weight to 90% by weight and the non-crosslinked acrylic resin (C) be contained in an amount of 10% by weight to 50% by weight, (iii) more preferable that the fine polymer particles (B) be contained in an amount of 50% by weight to 85% by weight and the non-crosslinked acrylic resin (C) be contained in an amount of 15% by weight to 50% by weight, (iv) more preferable that the fine polymer particles (B) be contained in an amount of 50% by weight to 80% by weight and the non-crosslinked acrylic resin (C) be contained in an amount of 20% by weight to 50% by weight, (v) most preferable that the fine polymer particles (B) be contained in an amount of 60% by weight to 80% by weight and the non-crosslinked acrylic resin (C) be contained in an amount of 20% by weight to 40% by weight. This is because the fine polymer particles (B) contained in the above amount and the non-crosslinked acrylic resin (C) contained in the above amount allow the fine polymer particles (B) to have favorable dispersibility in the epoxy resin (A).

The weight average molecular weight of the non-crosslinked acrylic resin (C) is not particularly limited, and is preferably not more than 100,000, more preferably not more than 80,000, more preferably not more than 50,000, more preferably not more than 30,000, more preferably not more than 20,000, most preferably not more than 10,000. According to the above feature, it is possible to prevent an increase in viscosity of the adhesive agent and allow the adhesive agent to have a higher viscosity.

The glass transition temperature of the non-crosslinked acrylic resin (C) is not particularly limited, and is preferably not higher than 80°C, more preferably not higher than 70°C, more preferably not higher than 60°C, more preferably not higher than 50°C, more preferably not higher than 40°C, more preferably not higher than 30°C, more preferably not higher than 20°C, more preferably not higher than 10°C, more preferably not higher than 0°C, more preferably not higher than -10°C, more preferably not higher than -20°C, more preferably not higher than -30°C, more preferably not higher than -40°C, more preferably not higher than -50°C. According to the above feature, it is possible to prevent a reduction in peel strength of the adhesive agent.

The viscosity of the non-crosslinked acrylic resin (C) is not particularly limited, and is preferably not more than 1,000,000 mPa·s at 25°C, more preferably not more than 500,000 mPa·s at 25°C, more preferably not more than 200,000 mPa·s at 25°C, more preferably not more than 100,000 mPa·s at 25°C, most preferably not more than 50,000 mPa·s at 25°C. In other words, the non-crosslinked acrylic resin (C) is preferably in liquid form. According to the above feature, it is possible to prevent an increase in viscosity of the adhesive agent.

The non-crosslinked acrylic resin (C) preferably forms a domain in a cured product that is obtained by curing the adhesive agent. Furthermore, the fine polymer particles (B) preferably have an average particle size that is larger than a longitudinal dimension of the domain. The average particle size of the fine polymer particles (B) and the longitudinal dimension of the domain each can be measured by scanning electron microscopic analysis (a SEM method). The average particle size of the fine polymer particles (B) refers to the average of diameters of virtual circles equal in area to the projections (such diameters are area-equivalent circle diameters) of 30 randomly selected fine polymer particles (B) in a SEM image. The longitudinal dimension of the domain refers to the average of the longest dimensions of 30 randomly selected non-crosslinked acrylic resin (C) fine particles (the longest lengths of straight lines connecting two points on the circumference) in a SEM image. For example, Fig. 1 is a SEM image of a cured product of an adhesive agent of Example 3, obtained by the method described later. In the SEM image, "10" indicates the fine polymer particles (B), and "20" indicates the domain of the non-crosslinked acrylic resin (C).

The longitudinal dimension of the domain of the non-crosslinked acrylic resin (C) is preferably not less than 1 nm and not more than 500 $\mu$m, more preferably not less than 10 nm and not more than 100 $\mu$m, more preferably not less than 10 nm and not more than 10 $\mu$m, most preferably not less than 10 nm and not more than 1 $\mu$m. For example, it is possible to measure the lengths of the longitudinal dimensions of a predetermined number of (e.g., 10, 100, or 1000) domains with use of a microscope and calculate the longitudinal dimension of the domain as an average value of the measured lengths. Note that the longitudinal dimension of the domain can be alternatively calculated in accordance with the method disclosed in Examples described later. According to the above feature, it is possible to achieve a more favorable peeling form.

The proportion (lower limit) of the domain present in a cured product of the adhesive agent is not particularly limited, and is preferably not less than 1%, more preferably not less than 2%, most preferably not less than 3%. The proportion (upper limit) of the domain present in a cured product of the adhesive agent is not particularly limited, and is preferably not more than 50%, more preferably not more than 40%, more preferably not more than 30%, more preferably not more than 20%, most preferably not more than 10%. For example, by using a microscope to observe a surface or a cross section of the cured product and measuring an area (A) occupied by the domain in the surface or the cross section and an area (B) occupied, in the surface or the cross section, by a part of the cured product in which part no domain is present, it is possible to calculate the proportion of the domain present in the cured product as "A/(A+B)×100" (%). Note that the proportion of the domain present in the cured product can be alternatively calculated in accordance with the method disclosed in Examples described later. According to the above feature, it is possible to achieve a more favorable peeling form.

The longitudinal dimension of the domain is preferably smaller than the average particle size of the fine polymer particles (B). For example, it is preferable that "a<b", "10×a<b", "100×a<b", or "1000×a<b" where "a" represents a value of the longitudinal dimension of the domain and "b" represents a value of the average particle size of the fine polymer particles (B). According to the above feature, it is possible to achieve a more favorable peeling form.

(1-4. Optional component)

The adhesive agent in accordance with an embodiment of the present invention may contain an optional component different from the components listed earlier. Examples of the optional component encompass: curing agents; curing accelerators; reinforcing agents; coloring agents (e.g., pigments and colorants); extenders; pigment dispersing agents; ultraviolet ray absorbing agents; the foregoing antioxidants; heat stabilizers (antigelling agents); plasticizing agents; leveling agents; defoaming agents; silane coupling agents; antistatic agents; flame retardants; lubricants; viscosity reducers; viscosity modifiers; thixotropy-imparting agents; shrinkage reducing agents; inorganic filler; organic filler; thermoplastic resins; desiccants; dispersion agents; thermal conductivity improving agents; water binders; antisag agents; antiflooding agents; anti-settling agents; adhesive layer wear regulating agents; surface control agents; monobasic organic acids; camphor; and castor oil.

More specific examples of the optional component encompass: epoxy curing agents; curing accelerators; and rubber-modified epoxy resins, urethane-modified epoxy resins, or reinforcing agents such as blocked urethane. The adhesive agent that contains an epoxy curing agent has an advantage of being easily curable. The adhesive agent that contains a curing accelerator has an advantage of being easily curable. The adhesive agent that contains a reinforcing agent has an advantage of achieving a further improvement of performance capabilities of a cured product (adhesive layer), such as toughness, shock resistance, shear adhesiveness, and peeling adhesiveness.

Specifically, for example, a component that exhibits activity upon heating (such a component may also be referred to as a latent epoxy curing agent) can be used as the epoxy curing agent. As the latent epoxy curing agent, it is possible to use a nitrogen (N)-containing curing agent, such as specific amine based curing agents (including imine based curing agents). Examples of the epoxy curing agent encompass a boron trichloride/amine complex, a boron trifluoride/amine complex, dicyandiamide, melamine, diallyl melamine, guanamine (for example, acetoguanamine and benzoguanamine), aminotriazole (for example, 3-amino-1,2,4-triazole), hydrazide (for example, adipic acid dihydrazide, stearic acid dihydrazide, isophthalic acid dihydrazide, and semicarbazide), cyanoacetamide, and aromatic polyamine (for example, meta-phenylenediamine, diaminodiphenylmethane, and diaminodiphenylsulfone). It is more preferable to use dicyandiamide, isophthalic acid dihydrazide, adipic acid dihydrazide, and/or 4,4'-diaminodiphenylsulfone as the epoxy curing agent. It is particularly preferable to use dicyandiamide as the epoxy curing agent. This is because these epoxy curing agents each have excellent adhesiveness.

Out of the above epoxy curing agents, a latent epoxy curing agent is preferable because a latent epoxy curing agent makes it possible to use the present adhesive agent as a one-component type adhesive agent.

The following description will discuss a case where the present adhesive agent is used as a two-component type or multi-component type adhesive agent. In this case, it is possible to select an amine based curing agent (including imine based curing agents) other than those above, and/or a mercaptan based curing agent as an epoxy curing agent that exhibits activity at comparatively low temperatures around room temperature (in some cases also referred to as a roomtemperature-curing curing agent).

Examples of such an epoxy curing agent that exhibits activity at comparatively low temperatures around room temperature encompass: (a) amine based curing agents such as polyamide amines, amine-terminated polyether, amine-terminated rubber, modified aliphatic polyamine, modified alicyclic polyamine, and polyamide; and (b) the various compounds disclosed in paragraph [0173] of the specification of No. WO2016-163491.

It is also possible to use, as the epoxy curing agent that exhibits activity at comparatively low temperatures around room temperature, an amine-terminated polyether that (i) includes a polyether main chain and (ii) has amino groups and/or imino groups whose combined number per molecule, on average, is 1 to 4 (preferably 1.5 to 3). Examples of a commercially available amine-terminated polyether encompass Jeffamine D-230, Jeffamine D-400, Jeffamine D-2000, Jeffamine D-4000, and Jeffamine T-5000, each manufactured by Huntsman.

It is also possible to use, as the epoxy curing agent that exhibits activity at comparatively low temperatures around room temperature, amine-terminated rubber that (i) includes a conjugated diene based polymer main chain and (ii) has amino groups and/or imino groups whose combined number per molecule, on average, is 1 to 4 (more preferably 1.5 to 3). The main chain of the rubber, i.e., the conjugated diene based polymer main chain is preferably a homopolymer or copolymer of polybutadiene, more preferably a polybutadiene/acrylonitrile copolymer, and particularly preferably a polybutadiene/acrylonitrile copolymer having an acrylonitrile monomer content of 5 mass% to 40 mass% (more preferably 10 mass% to 35 mass%, and even more preferably 15 mass% to 30 mass%) in 100 mass% of the polymer chain. Examples of a commercially available amine-terminated rubber encompass Hypro 1300X16 ATBN manufactured by CVC.

Out of the above amine based curing agents that exhibit activity at comparatively low temperatures around room temperature, polyamide amines, amine-terminated polyether, and amine-terminated rubber are more preferable, and it is particularly preferable to use a polyamide amine, amine-terminated polyether, and amine-terminated rubber in combination.

Out of the epoxy curing agents, it is also possible to use acid anhydrides, phenols, and the like as the latent epoxy curing agent. Acid anhydrides, phenols, and the like require temperatures that are higher compared to an amine based curing agent, but have a long pot life and result in a good balance of physical properties of the resulting adhesive layer, such as electrical, chemical, and mechanical properties. Examples of the acid anhydrides encompass the various compounds disclosed in paragraph [0178] of the specification of WO 2016-163491.

The epoxy curing agents may be used alone or in combination of two or more.

The adhesive agent contains the epoxy curing agent(s) in an amount that is not limited and is preferably 1 part by mass to 80 parts by mass, more preferably 1 part by mass to 50 parts by mass, most preferably 1 part by mass to 30 parts by mass, with respect to 100 parts by mass of the epoxy resin (A). According to the above feature, it is possible to make more favorable the advantage (described earlier) that the adhesive agent has by containing the epoxy curing agent(s).

Specific examples of the curing accelerator encompass: (a) ureas such as p-chlorophenyl-N,N-dimethylurea (product name: Monuron), 3-phenyl-1,1-dimethylurea (product name: Fenuron), 3,4-dichlorophenyl-N,N-dimethylurea (product name: Diuron), N-(3-chloro-4-methylphenyl)-N',N'-dimethylurea (product name: Chlortoluron), and 1,1-dimethylphenylurea (product name: Dyhard); (b) tertiary amines such as benzyldimethylamine, 2,4,6-tris(dimethylaminomethyl)phenol, 2-(dimethylaminomethyl) phenol, 2,4,6-tris(dimethylaminomethyl)phenol incorporated into a poly(p-vinylphenol) matrix, triethylenediamine, and N,N-dimethylpiperidine; (c) imidazoles such as C1-C12 alkyleneimidazole, N-arylimidazole, 2-methylimidazole, 2-ethyl-2-methylimidazole, N-butylimidazole, 1-cyanoethyl-2-undecyl imidazolium trimellitate, and an addition product of epoxy resin and imidazole; and (d) 6-caprolactam. Tertiary amines and imidazoles, when used in combination with the amine based curing agent that is an epoxy curing agent different from dicyandiamide (e.g., a room-temperature-curing curing agent), make it possible to improve the curing rate, as well as e.g. the properties and heat resistance of the resulting adhesive layer. The curing accelerators may be used alone or in combination of two or more.

The adhesive agent contains the epoxy curing accelerator(s) in an amount that is not limited and is preferably 0.1 part by mass to 10 parts by mass, more preferably 0.1 part by mass to 8 parts by mass, most preferably 0.1 part by mass to 5 parts by mass, with respect to 100 parts by mass of the epoxy resin (A). According to the above feature, it is possible to make more favorable the advantage (described earlier) that the adhesive agent has by containing the curing accelerator(s)).

The curing accelerators can be used alone or in combination of two or more.

<Rubber-modified epoxy resin>

A rubber-modified epoxy resin is a reaction product that has been obtained by reacting rubber with an epoxy group-containing compound and that contains 1.1 or more, preferably two or more epoxy groups per molecule on average. Examples of the rubber encompass rubber-based polymers such as acrylonitrile-butadiene rubber (NBR); styrene-butadiene rubber (SBR); hydrogenated nitrile rubber (HNBR); ethylene-propylene rubber (EPDM); acrylic rubber (ACM); butyl rubber (IIR); butadiene rubber; and polyoxyalkylenes such as polypropylene oxide, polyethylene oxide, and polytetramethylene oxide. The rubber-based polymers each preferably contain a reactive group such as an amino group, a hydroxy group, or a carboxyl group as a terminal group. The rubber-modified epoxy resin is preferably a product obtained by reacting such a rubber-based polymer with an epoxy resin by a publicly known method at an appropriate blending ratio. Out of those products, acrylonitrile-butadiene rubber modified epoxy resin and polyoxyalkylene modified epoxy resin are preferred as the rubber-modified epoxy resin from the viewpoints of adhesiveness and impact-peeling-resistant adhesiveness of the resulting adhesive agent, and acrylonitrile-butadiene rubber modified epoxy resin is more preferred. Note that acrylonitrile-butadiene rubber modified epoxy resin is obtained by, for example, reacting carboxyl group-terminated NBR (CTBN) with bisphenol A epoxy resin.

The amount of an acrylonitrile monomer component contained in 100% by mass of the acrylonitrile-butadiene rubber (NBR) is preferably 5% by mass to 40% by mass, more preferably 10% by mass to 35% by mass, even more preferably 15% by mass to 30% by mass (a) from the viewpoints of adhesiveness and impact-peeling-resistant adhesiveness of the resulting adhesive agent, particularly preferably 20% by mass to 30% by mass (b) from the viewpoint of workability of the resulting adhesive agent.

Furthermore, examples of the rubber-modified epoxy resin also encompass an addition reaction product (hereinafter also referred to as an "adduct") of amino group-terminated polyoxyalkylene and an epoxy resin. The adduct can be easily produced by a publicly known method as disclosed in, for example, US Patent No. 5084532 and US Patent No. 6015865. The epoxy resin that is used to produce the adduct is exemplified by specific examples of the epoxy resin (A), which have been shown in an embodiment of the present invention. The epoxy resin is preferably bisphenol A epoxy resin and bisphenol F epoxy resin, more preferably bisphenol A epoxy resin. Examples of the amino group-terminated polyoxyalkylene that is used to produce the adduct and that is commercially available encompass Jeffamine D-230, Jeffamine D-400, Jeffamine D-2000, Jeffamine D-4000, and Jeffamine T-5000, each manufactured by Huntsman.

The number of epoxide reactive terminal groups per molecule on average in the rubber is preferably 1.5 to 2.5, more preferably 1.8 to 2.2. The number average molecular weight of the rubber, as determined as a polystyrene equivalent molecular weight measured by GPC, is preferably 1000 to 10000, more preferably 2000 to 8000, particularly preferably 3000 to 6000.

A method for producing the rubber-modified epoxy resin is not particularly limited, and the rubber-modified epoxy resin can be produced by, for example, reacting rubber with an epoxy group-containing compound in a large amount of the epoxy group-containing compound. Specifically, it is preferable to produce the rubber-modified epoxy resin by reacting 2 or more equivalents of an epoxy group-containing compound per 1 equivalent of an epoxy reactive terminal group in the rubber. It is preferable to react the epoxy group-containing compound in an amount sufficiently enough for the resulting product to be a mixture of (a) an adduct of the rubber and the epoxy group-containing compound and (b) a free epoxy group-containing compound. The rubber-modified epoxy resin is produced by, for example, heating the rubber and the epoxy group-containing compound to a temperature of 100°C to 250°C in the presence of catalysts such as phenyl dimethyl urea and triphenyl phyosphine. The epoxy group-containing compound that is used to produce the rubber-modified epoxy resin is not particularly limited, and is preferably bisphenol A epoxy resin and bisphenol F epoxy resin, more preferably bisphenol A epoxy resin. Note that an embodiment of the present invention assumes that an unreacted epoxy group-containing compound that remains after the reaction is not encompassed in a rubber-modified epoxy resin of an embodiment of the present invention in a case where an excessive amount of the epoxy group-containing compound is used to produce the rubber-modified epoxy resin.

The rubber-modified epoxy resin makes it possible to modify the epoxy resin by preliminarily reacting the epoxy group-containing compound (epoxy resin) with a bisphenol component. The amount of the bisphenol component that is used to modify the epoxy resin is preferably 3 parts by mass to 35 parts by mass, more preferably 5 parts by mass to 25 parts by mass, with respect to 100 parts by mass of a rubber component in the rubber-modified epoxy resin. A cured product obtained by curing an adhesive agent containing the modified rubber-modified epoxy resin is excellent in adhesion durability after exposure to high temperatures and in impact resistance at low temperatures.

The glass transition temperature (Tg) of the rubber-modified epoxy resin is not particularly limited, and is preferably not higher than -25°C, more preferably not higher than -35°C, even more preferably not higher than -40°C, particularly preferably not higher than -50°C.

The number average molecular weight of the rubber-modified epoxy resin, as determined as a polystyrene equivalent molecular weight measured by GPC, is preferably 1500 to 40000, more preferably 3000 to 30000, particularly preferably 4000 to 20000. The molecular weight distribution of the rubber-modified epoxy resin (a ratio of weight average molecular weight to number average molecular weight (weight average molecular weight/number average molecular weight)) is preferably 1 to 4, more preferably 1.2 to 3, particularly preferably 1.5 to 2.5.

The amount of the rubber-modified epoxy resin contained in the adhesive agent is preferably 1 part by mass to 50 parts by mass, more preferably 2 parts by mass to 40 parts by mass, even more preferably 5 parts by mass to 30 parts by mass, particularly preferably 10 parts by mass to 20 parts by mass, with respect to 100 parts by mass of the epoxy resin (A). (a) Not less than 1 part 100 parts by mass that is the amount in which the rubber-modified epoxy resin is contained with respect to 100 parts by mass of the epoxy resin (A) tends to allow the resulting cured product to be unbrittle and have favorable impact-peeling-resistant adhesiveness, and (b) not more than 50 parts by mass of the rubber-modified epoxy resin that is the amount in which the rubber-modified epoxy resin is contained with respect to 100 parts by mass of the epoxy resin (A) tends to allow the resulting cured product to have favorable heat resistance and/or favorable elastic modulus (rigidity).

One type of such a rubber-modified epoxy resin may be used alone, or two or more types of such rubber-modified epoxy resins may be used in combination.

<Urethane-modified epoxy resin>

A urethane-modified epoxy resin is a reaction product that has been obtained by reacting (a) a compound containing an epoxy group and a group reactive with an isocyanate group with (b) an isocyanate group-containing urethane prepolymer and that contains 1.1 or more, preferably two or more epoxy groups per molecule on average. The urethane-modified epoxy resin is obtained by, for example, reacting a hydroxy group-containing epoxy compound with a urethane prepolymer.

The number average molecular weight of the urethane-modified epoxy resin, as determined as a polystyrene equivalent molecular weight measured by GPC, is preferably 1500 to 40000, more preferably 3000 to 30000, particularly preferably 4000 to 20000. The molecular weight distribution of the urethane-modified epoxy resin (a ratio of weight average molecular weight to number average molecular weight (weight average molecular weight/number average molecular weight)) is preferably 1 to 4, more preferably 1.2 to 3, particularly preferably 1.5 to 2.5.

The amount of the urethane-modified epoxy resin contained in the adhesive agent is preferably 1 part by mass to 50 parts by mass, more preferably 2 parts by mass to 40 parts by mass, even more preferably 5 parts by mass to 30 parts by mass, particularly preferably 10 parts by mass to 20 parts by mass, with respect to 100 parts by mass of the epoxy resin (A). (a) Not less than 1 part 100 parts by mass that is the amount in which the urethane-modified epoxy resin is contained with respect to 100 parts by mass of the epoxy resin (A) tends to allow the resulting cured product to be unbrittle and have favorable impact-peeling-resistant adhesiveness, and (b) not more than 50 parts by mass of the rubber-modified epoxy resin that is the amount in which the urethane-modified epoxy resin is contained with respect to 100 parts by mass of the epoxy resin (A) tends to allow the resulting cured product to have favorable heat resistance and/or favorable elastic modulus (rigidity).

One type of such a urethane-modified epoxy resin may be used alone, or two or more types of such urethane-modified epoxy resins may be used in combination.

<Blocked urethane>

The blocked urethane is an elastomer which is a compound that (i) contains a urethane group and/or a urea group and (ii) has an isocyanate group as a terminal group, a portion of or all of the isocyanate groups being capped with any of various blocking agents having an active hydrogen group. In particular, a compound in which all of the terminal isocyanate groups are capped with a blocking agent is preferable. Such a compound is obtained by, for example, a method involving the following: (i) preparing a polymer (urethane prepolymer) that has a urethane group and/or a urea group in its main chain and has an isocyanate group as a terminal group; and (ii) after or simultaneously with (i), causing a blocking agent having an active hydrogen group to cap a portion of or all of the isocyanate groups. The urethane prepolymer can be prepared by reacting an excessive amount of a polyisocyanate compound with an organic polymer having an active-hydrogen-containing group as a terminal group.

The blocked urethane is, for example, expressed by the following General Formula (1):

$$A\text{-}(NR^2\text{-}C(=O)\text{-}X)a \quad (1)$$

where: an "a" number of $R^2$ are each independently a C1 to C20 hydrocarbon group, "a" representing the average number of capped isocyanate groups per molecule, which is preferably not less than 1.1, more preferably 1.5 to 8, even more preferably 1.7 to 6, particularly preferably 2 to 4; "X" represents a part of the blocking agent excluding an active hydrogen atom; and "A" represents a part of an isocyanate-terminated prepolymer excluding a terminal isocyanate group.

The number average molecular weight of the blocked urethane, as determined as a polystyrene equivalent molecular weight measured by GPC, is preferably 2000 to 40000, more preferably 3000 to 30000, and particularly preferably 4000 to 20000. The molecular weight distribution of the blocked urethane (a ratio of weight average molecular weight to number average molecular weight (weight average molecular weight/number average molecular weight)) is preferably 1 to 4, more preferably 1.2 to 3, particularly preferably 1.5 to 2.5. The amount of the blocked urethane contained in the adhesive agent is preferably 1 part by mass to 50 parts by mass, more preferably 2 parts by mass to 40 parts by mass, even more preferably 5 parts by mass to 30 parts by mass, particularly preferably 10 parts by mass to 20 parts by mass, with respect to 100 parts by mass of the epoxy resin (A). (a) Not less than 1 part 100 parts by mass that is the amount in which the blocked urethane is contained with respect to 100 parts by mass of the epoxy resin (A) tends to allow the resulting cured product to be unbrittle and have favorable impact-peeling-resistant adhesiveness, and (b) not more than 50 parts by mass of the rubber-modified epoxy resin that is the amount in which the blocked urethane is contained with respect to 100 parts by mass of the epoxy resin (A) tends to allow the resulting cured product to have favorable heat resistance and/or favorable elastic modulus (rigidity).

(Viscosity of adhesive agent)

The viscosity of the adhesive agent is not particularly limited, and is preferably not more than 1,000,000 mPa·s at 50°C, more preferably not more than 800,000 mPa·s at 50°C, most preferably not more than 600,000 mPa·s at 50°C. According to the above feature, it is possible to provide an adhesive agent that is easy to handle.

(1-5. Application of adhesive agent)

The adhesive agent in accordance with an embodiment of the present invention exhibits favorable adhesiveness to various adherends such as cold-rolled steel, aluminum, fiberglass-reinforced polyester (FRP), panels made of cured products obtained by curing thermosetting resins (for example, epoxy resin) reinforced with carbon fibers, panels made of thermoplastic resin sheets reinforced with carbon fibers, sheet molding compounds (SMC), an ABS, PVC, polycarbonate, polypropylene, TPO, wood, and glass.

The adhesive agent in accordance with an embodiment of the present invention therefore can be used as a cured product, a one-component type adhesive agent, an adhesive agent for structures, or an adhesive agent for vehicles.

That is, an embodiment of the present invention can be arranged as any of the following (1) to (4):

(1) a cured product obtained by curing the adhesive agent in accordance with an embodiment of the present invention;
(2) a one-component type adhesive agent obtained with use of the adhesive agent in accordance with an embodiment of the present invention;
(3) an adhesive agent for structures obtained with use of the adhesive agent in accordance with an embodiment of the present invention; or
(4) an adhesive agent for vehicles obtained with use of the adhesive agent in accordance with an embodiment of the present invention.

The adhesive agent for structures which contains the adhesive agent in accordance with an embodiment of the present invention can be used as an adhesive agent for, for example, structural members in the fields of automobiles, cars (for example, shinkansen (bullet trains) and trains), civil engineering, construction, building materials, woodworking, electricity, electronics, aircrafts, space industry, and the like. Specific examples of automotive-related applications encompass (i) bonding of interior materials such as ceilings, doors, and seats, (ii) automotive luminaires such as lamps, and (iii) bonding of exterior materials such as body side molding.

[2. Method for producing adhesive agent]

A method for producing an adhesive agent in accordance with an embodiment of the present invention includes a mixing step of mixing 100 parts by mass of an epoxy resin (A) and a powdery and/or granular material containing 1 part by mass to 100 parts by mass of fine polymer particles (B) and 1 part by mass to 100 parts by mass of a non-crosslinked acrylic resin (C), the fine polymer particles (B) containing a rubber-containing graft copolymer that includes an elastic body and a graft part grafted to the elastic body, the elastic body containing at least one selected from the group consisting of diene-based rubbers, (meth)acrylate-based rubbers, and organosiloxane-based rubbers, and the graft part containing a polymer that contains, as one or more structural units, one or more structural units derived from at least one type of monomer selected from the group consisting of aromatic vinyl monomers, vinyl cyanide monomers, and (meth)acrylate monomers.
The method for producing the adhesive agent in accordance with an embodiment of the present invention includes the above feature. Thus,
[0205]  The method for producing the adhesive agent in accordance with an embodiment of the present invention may further include, before the mixing step, a powdery and/or granular material preparing step for preparing a powdery and/or granular material. With this feature,
[0206]  The non-crosslinked acrylic resin (C) forms a domain in a cured product that is obtained by curing the adhesive agent. Furthermore, the fine polymer particles (B) preferably have an average particle size that is larger than a longitudinal dimension of the domain. In other words, the longitudinal dimension of the domain is preferably smaller than the average particle size of the fine polymer particles (B). The longitudinal dimension of the domain is preferably not less than 1 nm and not more than 500 $\mu$, more preferably not less than 10 nm and not more than 100 $\mu$m, more preferably not less than 10 nm and not more than 10 $\mu$m, most preferably not less than 10 nm and not more than 1 $\mu$m. It is preferable that "a<b", "10×a<b", "100×a<b", or "1000×a<b" where "a" represents a value of the longitudinal dimension of the domain and "b" represents a value of the average particle size of the fine polymer particles (B). According to the above feature, it is possible to achieve a more favorable peeling form.
The following description will discuss each of the steps. Note that descriptions of the features described in [1. Adhesive agent] are omitted in the following description.

(2-1. Powdery and/or granular material preparing step)

In the present specification, the term "powdery and/or granular material" refers to a material which can be powder and/or granule(s) and which is made up of powder particle(s), grain(s), and/or the like. In a case where a specific distinction is made between "granules" and "powder", the "powder" has a volume-average particle size of 0.01 mm to 0.1 mm, whereas the "granules" have a volume-average particle size of 0.1 mm to 10 mm. Note, however, that the powdery and/or granular material may contain coarse particles of not less than 10 mm. The "volume-average particle size" that is less than 10 $\mu$m can be measured with use of a dynamic light scattering (DLS) particle size distribution analyzer Nanotrac WaveII-EX150 (manufactured by MicrotracBEL Corp.), and the "volume-average particle size" that is not less than 10 $\mu$m can be measured with use of a laser diffraction particle size distribution analyzer Microtrac MT3000II (manufactured by MicrotracBEL Corp.).
In the powdery and/or granular material preparing step, a method for obtaining a powdery and/or granular material that contains the fine polymer particles (B) and the non-crosslinked acrylic resin (C) is not particularly limited, and a known method can be used.

The fine polymer particles (B) can be obtained as an aqueous latex via, for example, emulsion polymerization. In the powdery and/or granular material preparing step, the powdery and/or granular material containing the fine polymer particles (B) and the non-crosslinked acrylic resin (C) can be obtained by, for example, (a1) adding the non-crosslinked acrylic resin (C) to the aqueous latex that contains the fine polymer particles (B), (a2) allowing the fine polymer particles (B) and the non-crosslinked acrylic resin (C) in the obtained aqueous latex to agglutinate together, (a3) collecting the obtained agglutinate that contains the fine polymer particles (B) and the non-crosslinked acrylic resin (C), and (a4) drying the collected agglutinate.

A method for adding the non-crosslinked acrylic resin (C) to the aqueous latex that contains the fine polymer particles (B) is not particularly limited. Examples of the method encompass (a) a method involving adding the non-crosslinked acrylic resin (C) directly to the aqueous latex, (b) a method involving separately preparing an aqueous latex that contains the non-crosslinked acrylic resin (C) and then adding the aqueous latex that contains the non-crosslinked acrylic resin (C) to the aqueous latex that contains the fine polymer particles (B), and (c) a method involving separately preparing a solution that contains the non-crosslinked acrylic resin (C) and then adding the solution that contains the non-crosslinked acrylic resin (C) to the aqueous latex that contains the fine polymer particles (B). A method of adding the non-crosslinked acrylic resin (C) to the aqueous latex is preferably a method involving separately preparing an aqueous latex that contains the non-crosslinked acrylic resin (C) and then adding the aqueous latex that contains the non-crosslinked acrylic resin (C) to the aqueous latex that contains the fine polymer particles (B).

An aspect of the powdery and/or granular material preparing step may be as follows. Specifically, an aspect of the powdery and/or granular material preparing step may be obtaining the powdery and/or granular material containing the fine polymer particles (B) and the non-crosslinked acrylic resin (C) by (b1) polymerizing the non-crosslinked acrylic resin (C) in the aqueous latex that contains the fine polymer particles (B), (b2) allowing the fine polymer particles (B) and the non-crosslinked acrylic resin (C) in the obtained aqueous latex to agglutinate together, (b3) collecting the obtained agglutinate that contains the fine polymer particles (B) and the non-crosslinked acrylic resin (C), and (b4) drying the collected agglutinate.

The powdery and/or granular material adjusting step can include the step of obtaining an agglutinate that contains the fine polymer particles (B) and the non-crosslinked acrylic resin (C). A method for allowing the fine polymer particles (B) and the non-crosslinked acrylic resin (C) in the aqueous latex to agglutinate together is not particularly limited. The method can be, for example, a known method such as a method involving carrying out salting out using a salt, a method using a solvent, or a method involving spraying the aqueous latex. It is noted here that, when the fine polymer particles (B) and the non-crosslinked acrylic resin (C) in the aqueous latex are allowed to agglutinate together, a mixture that contains (i) the agglutinate containing the fine polymer particles (B) and the non-crosslinked acrylic resin (C) and (ii) an aqueous solvent may also be referred to as slurry.

In order to achieve a good anti-blocking property and to allow the fine polymer particles (B) to be well dispersed in the epoxy resin (A) in the resulting adhesive agent, it is preferable that the fine polymer particles (B) and the non-crosslinked acrylic resin (C) in the aqueous latex be allowed to agglutinate in the presence of an anti-blocking agent. In other words, the present powdery and/or granular material preferably further contains an anti-blocking agent. With this feature, the resulting powdery and/or granular material (a) has an excellent anti-blocking property, and (b) has excellent dispersibility of the fine polymer particles (B) in the non-crosslinked acrylic resin (C).

Examples of the anti-blocking agent encompass: anti-blocking agents composed of inorganic fine particles, such as fine particles of silicon dioxide, titanium oxide, aluminum oxide, zirconium oxide, aluminum silicate, diatomaceous earth, zeolite, kaolin, talc, calcium carbonate, calcium phosphate, barium sulfate, or magnesium hydrosilicate; anti-blocking agents composed of organic fine particles; and fat-based and/or oil-based anti-blocking agents such as polyethylene wax, higher fatty acid amides, metal soap, and silicone oil. Out of such anti-blocking agents, anti-blocking agents composed of fine particles are preferred, anti-blocking agents composed of organic fine particles are more preferred. An anti-blocking agent composed of organic fine particles is particularly preferably an anti-blocking agent composed of organic fine particles of a polymer that contains at least one type of monomer unit selected from the group consisting of aromatic vinyl monomers, vinyl cyanide monomers, and (meth)acrylate monomers.

An anti-blocking agent composed of fine particles, in general, is in the form of a dispersion composed of the fine particles and a medium in which the particles are dispersed or is in the form of a colloid. The fine particles in the anti-blocking agent have a volume-average particle size (Mv) of usually not greater than 10 pm, preferably 0.05 $\mu$m to 10.00 $\mu$m. The amount of the anti-blocking agent contained with respect to the total weight (100% by weight) of the powdery and/or granular material is preferably 0.01% by weight to 5.00% by weight, more preferably 0.50% by weight to 3.00% by weight.

The anti-blocking agent and other optional component(s) can be added as appropriate during any step of a method of production of the adhesive agent. For example, the anti-blocking agent and other optional component(s) can be added to an aqueous suspension (aqueous latex) before or after flocculation of the fine polymer particles (B) or the fine polymer particles (B) and the epoxy resin (A). Alternatively, the anti-blocking agent and other optional component(s) can be added to a powdery and/or granular material containing the fine polymer particles (B), the epoxy resin (A), or the fine polymer particles (B) and the epoxy resin (A).

A method for collecting the agglutinate that contains the fine polymer particles (B) and the non-crosslinked acrylic resin (C) is not particularly limited, provided that the aqueous solvent and the agglutinate in the slurry can be separated. A known method can be employed. The method for collecting the agglutinate that contains the fine polymer particles (B) and the non-crosslinked acrylic resin (C) can be, for example, a method involving subjecting the slurry to filtration, a method involving subjecting the slurry to centrifugal dehydration, or the like.

A method for drying the agglutinate is not particularly limited, and can be a known method such as using a dryer.

An aspect of the powdery and/or granular material preparing step may be as follows. Specifically, an aspect of the powdery and/or granular material preparing step may be obtaining powder that contains the fine polymer particles (B) and the non-crosslinked acrylic resin (C) by (c1) using an aqueous latex that contains only the fine polymer particles (B) and allowing the fine polymer particles (B) in the aqueous latex to agglutinate, (c2) collecting the obtained agglutinate of the fine polymer particles (B), (c3) mixing the collected agglutinate of the fine polymer particles (B) with the non-crosslinked acrylic resin (C), and (c4) drying the obtained mixture.

A method for collecting the agglutinate of the fine polymer particles (B) can be, for example, a method similar to the foregoing method for collecting the agglutinate that contains the fine polymer particles (B) and the non-crosslinked acrylic resin (C). A method for mixing the collected agglutinate of the fine polymer particles (B) with the non-crosslinked acrylic resin (C) is not particularly limited. The method can be, for example, a mechanical mixing method using a planetary centrifugal mixer, a planetary mixer, a disper mixer, or the like.

A powdery and/or granular material is preferably operated (handled) in the environment at a temperature lower than the glass transition temperature of the graft part of the fine polymer particles (B) throughout the production method. In other words, the time for which an agglutinate containing the fine polymer particles (B) and the non-crosslinked acrylic resin (C) and a powdery and/or granular material containing the fine polymer particles (B) and the non-crosslinked acrylic resin (C) are subjected to the environment at a temperature equal to or higher than the glass transition temperature of the graft part of the fine polymer particles (B) is preferably shorter throughout the production method. With this feature, the resulting powdery and/or granular material is such that the fine polymer particles (B) are even more dispersible in the epoxy resin (A). As a result, the resulting powdery and/or granular material can provide an adhesive agent in which the fine polymer particles (B) are more uniformly dispersed in the epoxy resin (A).

Adjusting the following temperatures in the present production method makes it possible to shorten the time (period) for which an agglutinate containing the fine polymer particles (B) and the non-crosslinked acrylic resin (C) and a powdery and/or granular material containing the fine polymer particles (B) and the non-crosslinked acrylic resin (C) are subjected to the environment at a temperature equal to or higher than the glass transition temperature of the graft part of the fine polymer particles (B): the temperature of an aqueous latex that contains the fine polymer particles (B); the temperature of an aqueous latex (to which a flocculant has not been added) that contains the fine polymer particles (B) and the non-crosslinked acrylic resin (C); the temperature of an aqueous solution of a flocculant; the temperature of an aqueous latex that contains the fine polymer particles (B), the non-crosslinked acrylic resin (C), and the flocculant; the temperature during drying of the agglutinate; and/or the like.

The temperature lower than the glass transition temperature of the graft part of the fine polymer particles (B) varies depending on the composition of the graft part, and is appropriately set according to the composition of the graft part. The agglutinate that contains the fine polymer particles (B) and the non-crosslinked acrylic resin (C) and the powdery and/or granular material that contains the fine polymer particles (B) and the non-crosslinked acrylic resin (C) are handled, throughout the production method, preferably in the environment at a temperature lower than 90°C, more preferably in the environment at a temperature lower than 80°C, even more preferably in the environment at a temperature lower than 70°C. That is, each of the foregoing temperatures is preferably lower than 90°C, more preferably lower than 80°C, more preferably lower than 70°C, more preferably lower than 60°C, more preferably loser than 50°C, even more preferably lower than 40°C.

The resulting powdery and/or granular material has an excellent anti-blocking property. In the present specification, the anti-blocking property of the powdery and/or granular material can be evaluated on the basis of a force required to break a block of the powdery and/or granular material. The present powdery and/or granular material is preferably such that a force required to break a block of the powdery and/or granular material is not more than 30000 Pa. It is noted here that the block is a block obtained by applying, to the powdery and/or granular material which is being allowed to stand, a load of 6.3 kg at 60°C for 2 hours by placing a 6.3 kg weight on 30 g of the powdery and/or granular material contained in a cylindrical container having a diameter of 50 mm. It is also noted that the force (force required to break the block of the powdery and/or granular material) is a value obtained by measurement using a rheometer.

(2-2. Mixing step)

In the mixing step, a powdery and/or granular material containing a predetermined amount of the fine polymer particles (B) and a predetermined amount of the non-crosslinked acrylic resin (C) is mixed with a predetermined amount of the epoxy resin (A). In the mixing step, another non-crosslinked acrylic resin (C) that is different from the non-crosslinked acrylic resin (C) contained in the powdery and/or granular material may be mixed with a predetermined amount of the epoxy resin (A). Note that the amounts of components to be mixed may be adjusted in accordance with amounts of components contained in an adhesive agent, which is an end product.

A method for mixing the epoxy resin (A) and the powdery and/or granular material is not particularly limited. The method can be, for example, a mechanical mixing method using a planetary centrifugal mixer, a planetary mixer, a disper mixer, or the like.

An embodiment of the present invention may be configured as follows.

[1] An adhesive agent containing: an epoxy resin (A); and with respect to 100 parts by mass of the epoxy resin (A), 1 part by mass to 100 parts by mass of fine polymer particles (B) and 1 part by mass to 100 parts by mass of a non-crosslinked acrylic resin (C), the fine polymer particles (B) containing a rubber-containing graft copolymer that includes an elastic body and a graft part grafted to the elastic body, the elastic body containing at least one selected from the group consisting of diene-based rubbers, (meth)acrylate-based rubbers, and organosiloxane-based rubbers, the graft part containing a polymer that contains, as one or more structural units, one or more structural units derived from at least one type of monomer selected from the group consisting of aromatic vinyl monomers, vinyl cyanide monomers, and (meth)acrylate monomers, the non-crosslinked acrylic resin (C) forming a domain in a cured product that is obtained by curing the adhesive agent, and the fine polymer particles (B) having an average particle size that is larger than a longitudinal dimension of the domain.

[2] The adhesive agent recited in [1], wherein the fine polymer particles (B) are contained in an amount of 50% by weight to 99% by weight and the non-crosslinked acrylic resin (C) is contained in an amount of 1% by weight to 50% by weight, where 100% by weight represents the total amount of the fine polymer particles (B) and the non-crosslinked acrylic resin (C).

[3] The adhesive agent recited in [1] or [2], wherein the non-crosslinked acrylic resin (C) has a weight average molecular weight of not more than 100,000.

[4] The adhesive agent recited in any one of [1] through [3], wherein the non-crosslinked acrylic resin (C) has a glass transition temperature of not higher than 80°C.

[5] The adhesive agent recited in any one of [1] through [4], wherein the non-crosslinked acrylic resin (C) is a liquid having a viscosity of not more than 1,000,000 mPa·s at 25°C.

[6] A method for producing an adhesive agent, including a mixing step of mixing 100 parts by mass of an epoxy resin (A) and a powdery and/or granular material containing 1 part by mass to 100 parts by mass of fine polymer particles (B) and 1 part by mass to 100 parts by mass of a non-crosslinked acrylic resin (C), the fine polymer particles (B) containing a rubber-containing graft copolymer that includes an elastic body and a graft part grafted to the elastic body, the elastic body containing at least one selected from the group consisting of diene-based rubbers, (meth)acrylate-based rubbers, and organosiloxane-based rubbers, and the graft part containing a polymer that contains, as one or more structural units, one or more structural units derived from at least one type of monomer selected from the group consisting of aromatic vinyl monomers, vinyl cyanide monomers, and (meth)acrylate monomers.

[7] The method recited in [6], wherein the non-crosslinked acrylic resin (C) forms a domain in a cured product that is obtained by curing the adhesive agent.

[8] The method recited in [7], wherein the fine polymer particles (B) have an average particle size that is larger than a longitudinal dimension of the domain.

[9] The method recited in any one of [6] through [8], wherein a force required to break a block of the powdery and/or granular material is not more than 30000 Pa, wherein: the block is a block obtained by applying, to the powdery and/or granular material which is being allowed to stand, a load of 6.3 kg at 60°C for 2 hours by placing a 6.3 kg weight on 30 g of the powdery and/or granular material contained in a cylindrical container having a diameter of 50 mm, and the force is a value obtained by measurement using a rheometer.

Examples

[1. Details of components]

<Epoxy resin (A)>

A-1: Epoxy resin, manufactured by Mitsubishi Chemical Corporation, product name "JER828EL"

<Preparation of fine polymer particles (B)>

(Production Example 1-1: Preparation of aqueous latex (L-1) containing fine polymer particles (B-1))

Into a pressure-resistant polymerization apparatus were introduced 160 parts by weight of deionized water, 0.002 parts by weight of disodium ethylenediaminetetraacetate (EDTA), 0.001 parts by weight of ferrous sulfate heptahydrate, 0.029 parts by weight of polyoxyethylene lauryl ether phosphate, and 0.003 parts by weight of sodium hydroxide. In so doing, the polyoxyethylene lauryl ether phosphate turned into sodium polyoxyethylene lauryl ether phosphate in the presence of the sodium hydroxide, and functioned as an emulsifying agent. Next, while the materials thus introduced were stirred, gas in the pressure-resistant polymerization apparatus was replaced with nitrogen, so as to sufficiently remove oxygen from the inside of the pressure-resistant polymerization apparatus. After that, 76.5 parts by weight of butadiene (Bd) and 23.5 parts by weight of styrene (St) were introduced into the pressure-resistant polymerization apparatus, and the temperature inside the pressure-resistant polymerization apparatus was raised to 45°C. After that, 0.03 parts by weight of paramenthane hydroperoxide (PHP) was introduced into the pressure-resistant polymerization apparatus, and then 0.05 parts by weight of sodium formaldehyde sulfoxylate (SFS) was introduced into the pressure-resistant polymerization apparatus. Polymerization was then started. At the time 20 hours had elapsed from the start of the polymerization, residual monomers not used in the polymerization were removed by devolatilization under reduced pressure, and thereby the polymerization was ended. During the polymerization, PHP, polyoxyethylene lauryl ether phosphate, and sodium hydroxide were each added to the pressure-resistant polymerization apparatus in discretionarily selected amounts and discretionarily selected points in time. By the polymerization, an aqueous latex (R-1), which contained an elastic body containing polystyrene-butadiene rubber as a main component, was obtained. The volume-average particle size of the elastic body contained in the obtained aqueous latex was 192 nm.

Into a glass reaction vessel were introduced 215 parts by weight of the aqueous latex (R-1) of polystyrene-butadiene rubber (including 70 parts by weight of the elastic body containing polystyrene-butadiene rubber as a main component) and 82 parts by weight of deionized water. The glass reaction vessel had a thermometer, a stirrer, a reflux condenser, a nitrogen inlet, and a monomer adding device. While gas in the glass reaction vessel was replaced with nitrogen, the materials thus introduced were stirred at 60°C. Next, 2.6 parts by weight of 1,3-butylene glycol dimethacrylate and 0.07 parts by weight of t-butyl hydroperoxide (BHP) were added to the glass reaction vessel, and the resultant mixture in the glass reaction vessel was stirred for 10 minutes. After that, 0.004 parts by weight of EDTA, 0.001 parts by weight of ferrous sulfate heptahydrate, and 0.13 parts by weight of SFS were added to the glass reaction vessel, and the resultant mixture in the glass reaction vessel was stirred for 30 minutes. Next, 0.013 parts by weight of BHP was added to the glass reaction vessel, and the resultant mixture in the glass reaction vessel was stirred for another 30 minutes. After that, a mixture of 28.5 parts by weight of methyl methacrylate (MMA), 1.5 parts by weight of butyl acrylate (BA), and 0.085 parts by weight of BHP was continuously added to the glass reaction vessel over 120 minutes. Subsequently, 0.013 parts by weight of BHP was added to the glass reaction vessel, and the resultant mixture in the glass reaction vessel was stirred for another hour so as to finish polymerization. Through the above operations was obtained an aqueous latex (L-1) containing the fine polymer particles (B-1). Not less than 99% of the monomer component had been polymerized. The volume-average particle size of the fine polymer particles (B) contained in the obtained aqueous latex was 200 nm.

(Measurement of volume-average particle size)

The volume-average particle size (Mv) of an elastic body or fine polymer particles (B) dispersed in an aqueous latex was measured with use of Nanotrac WaveII-EX150 (manufactured by MicrotracBEL Corp.). A test specimen used for measurement was prepared by diluting the aqueous latex in deionized water. When the measurement was made, the refractive index of water and the refractive index of the elastic body or the fine polymer particles (B) obtained in each of Production Examples were inputted, measurement time was set to 120 seconds, and the concentration of the test specimen was adjusted such that a load index fell within the range of 1 to 10.

The volume-average particle size (Mv) of each powdery and/or granular material was measured using a laser diffraction particle size distribution analyzer Microtrac MT3000II (manufactured by MicrotracBEL Corp.). The test specimen was a dispersion slurry obtained by dispersing the powdery and/or granular material in water. All the powdery and/or granular materials used in Examples had a volume-average particle size of not more than 10 mm.

<Non-crosslinked acrylic resin (C)>

C-1: Non-crosslinked butyl acrylate homopolymer (BA: 100% by weight, Tg: -50.5°C, Mw: 13,000, viscosity at 25°C: 58,000 mPa·s),

C-2: Non-crosslinked butyl acrylate homopolymer (BA: 100% by weight, Tg: -52.5°C, Mw: 8,500, viscosity at 25°C: 27,000 mPa·s),

C-3: Non-crosslinked butyl acrylate homopolymer (BA: 100% by weight, Tg: -48.1°C, Mw: 25,000, viscosity at 25°C: 133,000 mPa·s),

C-4: Non-crosslinked butyl acrylate homopolymer (BA: 100% by weight, Tg: -46.5°C, Mw: 40,000, viscosity at 25°C: 441,000 mPa·s), and

C-5: Non-crosslinked butyl acrylate/methyl methacrylate copolymer (BA: 50% by weight and MMA: 50% by weight, Tg: 45°C, Mw: 20,000, viscosity at 25°C: unable to be measured because the copolymer was solid").

A method for adjusting each non-crosslinked acrylic resin (C) and an aqueous latex that contains the each non-crosslinked acrylic resin (C) is as described below.

<Preparation of non-crosslinked acrylic resin (C)>

(Production Example 2-1: Preparation of aqueous latex (FP-1) containing non-crosslinked acrylic resin (C-1))

Into a glass reaction vessel equipped with a thermometer, a stirrer, a reflux condenser, a nitrogen inlet, and a monomer component adding device were introduced 220 parts by weight of deionized water, 0.9 parts of polyoxyethylene lauryl ether phosphate, and 0.1 parts of sodium hydroxide. In so doing, the polyoxyethylene lauryl ether phosphate turned into sodium polyoxyethylene lauryl ether phosphate in the presence of the sodium hydroxide, and functioned as an emulsifying agent. Next, while the materials thus introduced were stirred at 68°C, gas in the glass reaction vessel was replaced with nitrogen, so as to sufficiently remove oxygen from the inside of the glass reaction vessel. After that, a mixture of 100 parts by weight of BA, 3.0 parts by weight of 2-ethylhexyl thioglycolate, and 1.0 part by weight of BHP was added continuously into the glass reaction vessel over 300 minutes. Then, 0.05 parts by weight of BHP was added to the glass reaction vessel, and the resultant mixture in the glass reaction vessel was stirred for another hour so as to finish polymerization. Through these operations, an aqueous emulsion (aqueous latex) (FP-1) was obtained that contained, as a non-crosslinked acrylic resin (C-1), a butyl acrylate homopolymer consisting of 100% by weight of butyl acrylate. Not less than 99% of the monomer component had been polymerized. The volume-average particle size of the non-crosslinked acrylic resin (C) contained in the obtained aqueous latex was 80 nm. The solid content concentration (concentration of the non-crosslinked acrylic resin (C)) in 100% by weight of the obtained aqueous latex (FP-1) was 33% by weight.

(Production Example 2-2: Preparation of aqueous latex (FP-2) containing non-crosslinked acrylic resin (C-2))

The same method as described in Production Example 2-1 was carried out, except that the amount of 2-ethylhexyl thioglycolate in the process for producing the non-crosslinked acrylic resin (C) (FP-1) was changed to 5.0 parts by weight. In this way, an aqueous emulsion (aqueous latex) (FP-2) was obtained that contained, as a non-crosslinked acrylic resin (C-2), a butyl acrylate homopolymer consisting of 100% by weight of butyl acrylate.

(Production Example 2-3: Preparation of aqueous latex (FP-3) containing non-crosslinked acrylic resin (C-3))

The same method as described in Production Example 2-1 was carried out, except that the amount of 2-ethylhexyl thioglycolate in the process for producing the non-crosslinked acrylic resin (C) (FP-1) was changed to 1.5 parts by weight. In this way, an aqueous emulsion (aqueous latex) (FP-3) was obtained that contained, as a non-crosslinked acrylic resin (C-3), a butyl acrylate homopolymer consisting of 100% by weight of butyl acrylate.

(Production Example 2-4: Preparation of aqueous latex (FP-4) containing non-crosslinked acrylic resin (C-4))

The same method as described in Production Example 2-1 was carried out, except that the amount of 2-ethylhexyl thioglycolate in the process for producing the non-crosslinked acrylic resin (C) (FP-1) was changed to 0.75 parts by weight. In this way, an aqueous emulsion (aqueous latex) (FP-4) was obtained that contained, as a non-crosslinked acrylic resin (C-4), a butyl acrylate homopolymer containing 100% by weight of butyl acrylate.

(Production Example 2-5: Preparation of aqueous latex (FP-5) containing non-crosslinked acrylic resin (C-5))

The same method as described in Production Example 2-1 was carried out, except that 100 parts by weight of BA in the process for producing the non-crosslinked acrylic resin (C) (FP-1) were changed to 50 parts by weight of MMA and 50 parts by weight of BA. In this way, an aqueous emulsion (aqueous latex) (FP-5) was obtained that contained, as a non-crosslinked acrylic resin (C-5), a copolymer of 50% by weight of butyl acrylate and 50% by weight of methyl methacrylate (non-crosslinked butyl acrylate/methyl methacrylate copolymer).

<Preparation of fine polymer particles having crosslinked polymer layer>

Into a glass reaction vessel equipped with a thermometer, a stirrer, a reflux condenser, a nitrogen inlet, and a monomer component and emulsifying agent adding device were introduced 182 parts by mass of deionized water, 0.006 parts by mass of EDTA, 0.0015 parts by mass of ferrous sulfate heptahydrate, 0.2 parts by mass of SFS, and 0.3 parts by mass of sodium dodecylbenzenesulfonate (SDBS). While the materials thus introduced were stirred in a nitrogen stream, the temperature inside the glass reaction vessel was raised to 60°C. Next, a mixture of 83 parts by mass of BA, 0.17 parts by mass of allyl methacrylate (ALMA), and 0.024 parts by mass of CHP was continuously dropped into the glass reaction vessel over 200 minutes. After the mixture had been added, stirring of the mixture in the glass reaction vessel was carried out for 0.5 hours to finish polymerization. In this way, an aqueous latex (R-2) containing a crosslinked polymer layer of fine polymer particles was obtained. Subsequently, a mixture of 16.15 parts by mass of MMA, 0.85 parts by mass of BA, and 0.05 parts by mass of CHP was continuously added into the glass reaction vessel over 50 minutes. Thereafter, 0.04 parts by mass of CHP was added into the glass reaction vessel, and the mixture in the glass reaction vessel was stirred for another hour to finish polymerization. In this way, an aqueous latex (CP-1) containing fine polymer particles having a crosslinked polymer layer was obtained. Not less than 99% of the monomer component had been polymerized. The volume-average particle size of the fine polymer particles contained in the obtained aqueous latex was 100 nm. The solid content concentration (concentration of the fine polymer particles) in 100% by weight of the obtained aqueous latex (CP-1) was 35% by weight.

<Preparation of powdery and/or granular material>

(Production Example 3-1: Preparation of powdery and/or granular material (P-1))

A homogenizer was used to mix (i) water, (ii) 67 parts by weight of epoxidized soybean oil (ADK CIZER O-130P manufactured by ADEKA CORPORATION) and 33 parts by weight of triethylene glycol bis[3-(-t-butyl-4-hydroxy-5-methylphenyl)propionate] (Irganox 245, manufactured by BASF JAPAN LTD.), and (iii) SDBS which is an emulsifying agent to prepare an aqueous emulsion (S-1) (the contained amount of a mixture of epoxidized soybean oil and triethylene glycol bis[3-(-t-butyl-4-hydroxy-5-methylphenyl)propionate] is 50%). Furthermore, 600 parts by weight of ion exchanged water having 4 parts by weight of calcium acetate dissolved therein and having its temperature controlled to 70°C was adjusted. Next, 325 parts by weight of the aqueous latex (L-1) (equivalent to 100 parts by weight of the fine polymer particles (B)) and 22.2 parts by weight of the aqueous emulsion (S-1) (equivalent to 11.1 parts by weight of the mixture of epoxidized soybean oil and triethylene glycol bis[3-(-t-butyl-4-hydroxy-5-methylphenyl)propionate]) were introduced into 600 parts by weight of the ion exchanged water, and a slurry containing a flocculate containing the fine polymer particles (B) was obtained. Next, the slurry was subjected to centrifugal dehydration to obtain wet powder, which is the above-mentioned flocculate. Two cycles of the operation of introducing the obtained wet powder into 500 parts by weight of ion exchanged water and the operation of subjecting the obtained mixture to centrifugal dehydration were carried out in total to obtain rinsed wet powder. Lastly, the wet powder was dried in a dryer at 50°C for 48 hours. In this way, a powdery and/or granular material (P-1) containing the fine polymer particles (B) was obtained. The concentration of the fine polymer particles (B) in 100% by weight of the obtained powdery and/or granular material (P-1) was 90% by weight.

(Production Example 3-2: Preparation of powdery and/or granular material (P-2))

An aqueous latex obtained by mixing 333 parts by weight of the aqueous latex (L-1) (equivalent to 100 parts by weight of the fine polymer particles (B)) and 75.8 parts by weight of the aqueous emulsion (aqueous latex) (FP-1) (equivalent to 25 parts by weight of the non-crosslinked acrylic resin (C)), and 1.1 parts by weight of Irganox 1135 were introduced into 600 parts by weight of ion exchanged water having 4 parts by weight of calcium acetate dissolved therein and having its temperature controlled to 70°C, the fine polymer particles (B) and the non-crosslinked acrylic resin (C) were flocculated, and a slurry containing a flocculate containing the fine polymer particles (B) and the non-crosslinked acrylic resin (C) was obtained. After that, the obtained slurry was subjected to centrifugal dehydration to obtain wet powder, which is the flocculate containing the fine polymer particles (B) and the non-crosslinked acrylic resin (C). With respect to the obtained wet powder, two cycles of the operation of introducing the wet powder into 500 parts of ion exchanged water and the operation of subjecting the obtained mixture to centrifugal dehydration were carried out in total to obtain rinsed wet powder. Lastly, the wet powder was dried in a dryer at 50°C for 48 hours. In this way, a powdery and/or granular material (P-2) containing the fine polymer particles (B) and the non-crosslinked acrylic resin (C) was obtained. The concentrations of the fine polymer particles (B) and the non-crosslinked acrylic resin (C) in 100% by weight of the obtained powdery and/or granular material (P-2) were 79% by weight and 20%, respectively.

(Production Example 3-3: Preparation of powdery and/or granular material (P-3))

The same method as described in Production Example 3-2 was carried out, except that as the non-crosslinked acrylic resin (C), the aqueous latex (FP-2) was used instead of the aqueous latex (FP-1). In this way, a powdery and/or granular material (P-3) containing the fine polymer particles (B) and the non-crosslinked acrylic resin (C) was obtained. The concentrations of the fine polymer particles (B) and the non-crosslinked acrylic resin (C) in 100% by weight of the obtained powdery and/or granular material (P-3) were 79% by weight and 20%, respectively.

(Production Example 3-4: Preparation of powdery and/or granular material (P-4))

The same method as described in Production Example 3-2 was carried out, except that as the non-crosslinked acrylic resin (C), the aqueous latex (FP-3) was used instead of the aqueous latex (FP-1). In this way, a powdery and/or granular material (P-4) containing the fine polymer particles (B) and the non-crosslinked acrylic resin (C) was obtained. The concentrations of the fine polymer particles (B) and the non-crosslinked acrylic resin (C) in 100% by weight of the obtained powdery and/or granular material (P-4) were 79% by weight and 20%, respectively.

(Production Example 3-5: Preparation of powdery and/or granular material (P-5))

The same method as described in Production Example 3-2 was carried out, except that as the non-crosslinked acrylic resin (C), the aqueous latex (FP-4) was used instead of the aqueous latex (FP-1). In this way, a powdery and/or granular material (P-5) containing the fine polymer particles (B) and the non-crosslinked acrylic resin (C) was obtained. The concentrations of the fine polymer particles (B) and the non-crosslinked acrylic resin (C) in 100% by weight of the obtained powdery and/or granular material (P-5) were 79% by weight and 20%, respectively.

(Production Example 3-6: Preparation of powdery and/or granular material (P-6))

The same method as described in Production Example 3-2 was carried out, except that as the non-crosslinked acrylic resin (C), the aqueous latex (FP-5) was used instead of the aqueous latex (FP-1). In this way, a powdery and/or granular material (P-6) containing the fine polymer particles (B) and the non-crosslinked acrylic resin (C) was obtained. The concentrations of the fine polymer particles (B) and the non-crosslinked acrylic resin (C) in 100% by weight of the obtained powdery and/or granular material (P-6) were 79% by weight and 20%, respectively.

(Production Example 3-7: Preparation of powdery and/or granular material (P-7))

266 parts by weight of the aqueous latex (L-1) (equivalent to 80 parts by weight of the fine polymer particles (B)) and 57.1 parts by weight of the aqueous emulsion (CP-1) (equivalent to 20 parts by weight of fine polymer particles having a crosslinked polymer layer), and 22.2 parts by weight of the aqueous emulsion (S-1) (equivalent to 11.1 parts by weight of a resin (epoxidized soybean oil) were mixed together. The obtained aqueous latex was introduced into 600 parts by weight of ion exchanged water having 4 parts by weight of calcium acetate dissolved therein and having its temperature controlled to 70°C, the fine polymer particles (B) and fine polymer particles having a crosslinked polymer layer were flocculated, and a slurry containing a flocculate containing the fine polymer particles (B) and the fine polymer particles having a crosslinked polymer layer was obtained. After that, the obtained slurry was subjected to centrifugal dehydration to obtain wet powder, which is the above-mentioned flocculate. With respect to obtained wet powder, two cycles of the operation of introducing the wet powder into 500 parts of ion exchanged water and the operation of subjecting the obtained mixture to centrifugal dehydration were carried out in total to obtain rinsed wet powder. Lastly, the wet powder was dried in a dryer at 50°C for 48 hours. In this way, a powdery and/or granular material (P-7) containing the fine polymer particles (B) and the fine polymer particles having a crosslinked polymer layer was obtained. The concentrations of the fine polymer particles (B) and the fine polymer particles having a crosslinked polymer layer in 100% by weight of the obtained powdery and/or granular material (P-7) were 72% by weight and 18%, respectively.

(Anti-blocking property of powdery and/or granular material)

With use of each of the obtained powdery and/or granular materials, the following operations (1) to (3) were carried out in this order to prepare a block of a powdery and/or granular material. (1) 30 g of the powdery and/or granular material was placed in a cylindrical container having a diameter of 50 mm. (2) To the powdery and/or granular material which was being allowed to stand, a load of 6.3 kg was applied at 60°C for 2 hours by placing a 6.3 kg weight on the powdery and/or granular material in the container, so that a block was obtained. (3) The obtained block was removed from the container. Next, a force required to break the obtained block of the powdery and/or granular material was measured using a rheometer. The anti-blocking property was evaluated on the basis of the obtained result with reference to the following criteria. All the powdery and/or granular materials used in Examples were evaluated as "acceptable".

Acceptable: A force required to break the block of the powdery and/or granular material is not more than 30000 Pa.
Unacceptable: A force required to break the block of the powdery and/or granular material is more than 30000 Pa.

<Preparation of adhesive agent (thermosetting resin composition)>

Comparative Example 1: (Production Example 4-1: Preparation of adhesive agent (thermosetting resin composition))

To 100 parts by weight of JER828EL, which is an epoxy resin (A-1), 10 parts by weight of "Cardura E10P" (product name, manufactured by Momentive) as a reactive diluent, 7 parts by weight of dicyandiamide (jER cure Dicy7) (product name, manufactured by Mitsubishi Chemical Corporation) as a curing agent, 1 part by weight of aromatic dimethylurea "Dyhard UR300" (product name, manufactured by Degussa) as a curing accelerator, 5 parts by weight of silica "CAB-O-SIL TS720" (product name, manufactured by CABOT), 0.3 parts by weight of carbon black "Monarch 280" (product name, manufactured by CABOT), 15 parts by weight of calcium carbonate "Whiton SB" (product name, manufactured by Shiraishi Calcium Kaisha, Ltd.), and 1.5 parts by weight of calcium oxide "CML#31" (product name, manufactured by Ohmi Chemical Industry) were added. The resultant mixture was mixed with use of a planetary centrifugal mixer at 2000 rpm for 10 minutes. In this way, an adhesive agent was obtained.

Comparative Example 2: (Production Example 4-2: Preparation of adhesive agent (thermosetting resin composition))

33.3 parts by weight of the powdery and/or granular material (P-1) and 100 parts by weight of JER828EL, which is the epoxy resin (A-1), were weighed out and mixed with use of a planetary centrifugal mixer at 2000 rpm for 30 minutes. In this way, a resin composition was obtained. To the resin composition, 10 parts by weight of "Cardura E10P" (manufactured by Momentive) as a reactive diluent, 7 parts by weight of dicyandiamide (jER cure Dicy7) (manufactured by Mitsubishi Chemical Corporation) as a curing agent, 1 part by weight of aromatic dimethylurea "Dyhard UR300" (manufactured by Degussa) as a curing accelerator, 5 parts by weight of silica "CAB-O-SIL TS720" (manufactured by CABOT), 0.3 parts by weight of carbon black "Monarch 280" (manufactured by CABOT), 15 parts by weight of calcium carbonate "Whiton SB" (manufactured by Shiraishi Calcium Kaisha, Ltd.), and 1.5 parts by weight of calcium oxide "CML#31" (manufactured by Ohmi Chemical Industry) were added. The resultant mixture was mixed with use of a planetary centrifugal mixer at 2000 rpm for 10 minutes. In this way, an adhesive agent was obtained.

Example 1: (Production Example 4-3: Preparation of adhesive agent (thermosetting resin composition))

37.5 parts by weight of the powdery and/or granular material (P-2) and 100 parts by weight of JER828EL, which is the epoxy resin (A-1), were weighed out and mixed with use of a planetary centrifugal mixer at 2000 rpm for 30 minutes. In this way, an adhesive agent (resin composition) was obtained. To the adhesive agent, 10 parts by weight of "Cardura E10P" (manufactured by Momentive) as a reactive diluent, 7 parts by weight of dicyandiamide (jER cure Dicy7) (manufactured by Mitsubishi Chemical Corporation) as a curing agent, 1 part by weight of aromatic dimethylurea "Dyhard UR300" (manufactured by Degussa) as a curing accelerator, 5 parts by weight of silica "CAB-O-SIL TS720" (manufactured by CABOT), 0.3 parts by weight of carbon black "Monarch 280" (manufactured by CABOT), 15 parts by weight of calcium carbonate "Whiton SB" (manufactured by Shiraishi Calcium Kaisha, Ltd.), and 1.5 parts by weight of calcium oxide "CML#31" (manufactured by Ohmi Chemical Industry) were added. The resultant mixture was mixed with use of a planetary centrifugal mixer at 2000 rpm for 10 minutes. In this way, a one-component type adhesive agent was obtained.

Example 2: (Production Example 4-4: Preparation of adhesive agent (thermosetting resin composition))

The same method as described in Production Example 4-3 was carried out, except that the powdery and/or granular material was replaced with (P-3). In this way, a one-component type adhesive agent was obtained.

Example 3: (Production Example 4-5: Preparation of adhesive agent (thermosetting resin composition))

The same method as described in Production Example 4-3 was carried out, except that the powdery and/or granular material was replaced with (P-4). In this way, a one-component type adhesive agent was obtained.

Example 4: (Production Example 4-6: Preparation of adhesive agent (thermosetting resin composition))

The same method as described in Production Example 4-3 was carried out, except that the powdery and/or granular material was replaced with (P-5). In this way, a one-component type adhesive agent was obtained.

Example 5: (Production Example 4-7: Preparation of adhesive agent (thermosetting resin composition))

The same method as described in Production Example 4-3 was carried out, except that the powdery and/or granular material was replaced with (P-6). In this way, a one-component type adhesive agent was obtained.

Comparative Example 3: (Production Example 4-8: Preparation of adhesive agent (thermosetting resin composition))

41.7 parts by weight of the powdery and/or granular material (P-7) and 100 parts by weight of JER828EL, which is the epoxy resin (A-1), were weighed out and mixed with use of a planetary centrifugal mixer at 2000 rpm for 30 minutes. In this way, a resin composition was obtained. To the resin composition, 10 parts by weight of "Cardura E10P" (manufactured by Momentive) as a reactive diluent, 7 parts by weight of dicyandiamide (jER cure Dicy7) (manufactured by Mitsubishi Chemical Corporation) as a curing agent, 1 part by weight of aromatic dimethylurea "Dyhard UR300" (manufactured by Degussa) as a curing accelerator, 5 parts by weight of silica "CAB-O-SIL TS720" (manufactured by CABOT), 0.3 parts by weight of carbon black "Monarch 280" (manufactured by CABOT), 15 parts by weight of calcium carbonate "Whiton SB" (manufactured by Shiraishi Calcium Kaisha, Ltd.), and 1.5 parts by weight of calcium oxide "CML#31" (manufactured by Ohmi Chemical Industry) were added. The resultant mixture was mixed with use of a planetary centrifugal mixer at 2000 rpm for 10 minutes. In this way, an adhesive agent was obtained.

Comparative Example 4: (Production Example 4-9: Preparation of adhesive agent (thermosetting resin composition))

The same method as described in Production Example 4-2 was carried out, except that the amount of the silica "CAB-O-SIL TS720" (product name, manufactured by CABOT) was changed to 12.5 parts by weight. In this way, an adhesive agent was obtained.

[2. Longitudinal dimension of domain]

The adhesive agents obtained in Examples 1 to 5 were cured under a condition of 70°C for 30 minutes. Next, a domain present in a cured product and formed by the non-crosslinked acrylic resin (C) was observed by SEM observation so that the longitudinal dimension of the domain was calculated. The proportion of the domain present in the cured product was calculated by an image analysis method. For example, Fig. 1 is a SEM image of a cured product of an adhesive agent of Example 3. In the SEM image, "10" indicates the fine polymer particles (B) (see a gray substantially spherical substance present at the arrow tip in Fig. 1), and "20" indicates the domain of the non-crosslinked acrylic resin (C) (see a white substantially spherical substance present at the arrow tip in Fig. 1).
In each of Examples 1 to 5, the longitudinal dimension of the domain formed by the non-crosslinked acrylic resin (C) had a value of 40 nm. As is clear from Fig. 1, the fine polymer particles (B) had an average particle size that was larger than the longitudinal dimension of the domain.

[3. Evaluation of T-peeling adhesive strength and peeling form]

An adhesive agent was applied to two SPCC steel sheets each having a dimension of 25 mm×200 mm×0.5 mm. One steel sheet was placed on the other so as to achieve an adhesive layer thickness of 0.25 mm. Thereafter, the adhesive agent was cured under a condition of 170°C for 1 hour so as to obtain an adhesive body of the steel sheet. For the adhesive body thus obtained, the T-peeling adhesive strength thereof was measured at 23°C in conformance with JIS K6854. A fracture surface of a test piece after the measurement was visually evaluated.

[4. Evaluation of peeling form]

A peeling form of an adhesive was evaluated by visually observing a fracture surface of a test piece after the measurement of the T-peeling adhesive strength.

<Evaluation criteria>

CF100: The peeling form is a cohesive failure.
AF100: The peeling form is an interfacial failure.

[5. Evaluation of viscosity]

An adhesive agent was measured for its viscosity with use of a digital viscometer DV-II+Pro manufactured by BROOKFIELD. The adhesive agent was measured for its viscosity at a temperature of 25°C with use of a spindle in accordance with a viscosity range while a shear rate was changed as necessary.
In the following description, Table 1 shows blending compositions and blended amounts of the adhesive agents, and Table 2 shows results of evaluation of the adhesive agents.

[Table 1]

| Blending composition | | | Example 1 | Example 2 | Example 3 | Example 4 | Example 5 |
|---|---|---|---|---|---|---|---|
| | Epoxy resin (A) | | A-1 | A-1 | A-1 | A-1 | A-1 |
| | Powdery and/or granular material | Type | P-2 | P-3 | P-4 | P-5 | P-6 |
| | | Fine polymer particles (B) | B-1 | B-1 | B-1 | B-1 | B-1 |
| | | Non-crosslinked acrylic resin (C) | C-1 | C-2 | C-3 | C-4 | C-5 |
| | | Other | - | - | - | - | - |
| | Other | Silica | CAB-O-SIL TS720 | CAB-O-SIL TS720 | CAB-O-SIL TS720 | CAB-O-SIL TS720 | CAB-O-SIL TS720 |
| | | Carbon black | Monarch 280 | Monarch 280 | Monarch 280 | Monarch 280 | Monarch 280 |
| | | Calcium carbonate | Whiton SB | Whiton SB | Whiton SB | Whiton SB | Whiton SB |
| | | Calcium oxide | CML #31 | CML #31 | CML #31 | CML #31 | CML #31 |
| Blended amount [part by mass] | Epoxy resin (A) | | 100 | 100 | 100 | 100 | 100 |
| | Powdery and/or granular material | | 37.5 | 37.5 | 37.5 | 37.5 | 37.5 |
| | Other | Silica | 5 | 5 | 5 | 5 | 5 |
| | | Carbon black | 0.3 | 0.3 | 0.3 | 0.3 | 0.3 |
| | | Calcium carbonate | 15 | 15 | 15 | 15 | 15 |
| | | Calcium oxide | 1.5 | 1.5 | 1.5 | 1.5 | 1.5 |

EP 4 036 135 A1

[Table 1] cont.

| | | | Comparative Example 1 | Comparative Example 2 |
|---|---|---|---|---|
| Blending composition | Epoxy resin (A) | | A-1 | A-1 |
| | Powdery and/or granular material | Type | - | P-1 |
| | | Fine polymer particles (B) | - | B-1 |
| | | Non-crosslinked acrylic resin (C) | - | - |
| | | Other | - | - |
| | Other | Silica | CAB-O-SIL TS720 | CAB-O-SIL TS720 |
| | | Carbon black | Monarch 280 | Monarch 280 |
| | | Calcium carbonate | Whiton SB | Whiton SB |
| | | Calcium oxide | CML #31 | CML #31 |
| Blended amount [part by mass] | Epoxy resin (A) | | 100 | 100 |
| | Powdery and/or granular material | | - | 33.3 |
| | Other | Silica | 5 | 5 |
| | | Carbon black | 0.3 | 0.3 |
| | | Calcium carbonate | 15 | 15 |
| | | Calcium oxide | 1.5 | 1.5 |

[Table 1] cont.

| | | | Comparative Example 3 | Comparative Example 4 |
|---|---|---|---|---|
| Blending composition | Epoxy resin (A) | | A-1 | A-1 |
| | Powdery and/or granular material | Type | P-7 | P-1 |
| | | Fine polymer particles (B) | B-1 | B-1 |
| | | Non-crosslinked acrylic resin (C) | - | - |
| | | Other | Fine polymer particles having crosslinked polymer layer | - |
| | Other | Silica | CAB-O-SIL TS720 | CAB-O-SIL TS720 |
| | | Carbon black | Monarch 280 | Monarch 280 |
| | | Calcium carbonate | Whiton SB | Whiton SB |
| | | Calcium oxide | CML#31 | CML#31 |
| Blended amount [part by mass] | Epoxy resin (A) | | 100 | 100 |
| | Powdery and/or granular material | | 41.7 | 33.3 |
| | Other | Silica | 5 | 12.5 |
| | | Carbon black | 0.3 | 0.3 |
| | | Calcium carbonate | 15 | 15 |
| | | Calcium oxide | 1.5 | 1.5 |

[Table 2]

| | | Example 1 | Example 2 | Example 3 | Example 4 | Example 5 |
|---|---|---|---|---|---|---|
| Evaluation | T-peeling adhesive strength [N/25 mm] | 218.8 | 219.5 | 213.8 | 222.1 | 199.0 |
| | Peeling form | CF100 | CF100 | CF100 | CF100 | CF100 |
| | Viscosity [mPa·s] | 26,988 | 28,575 | 23,813 | 26,988 | 77,788 |

[Table 2] cont.

| | | Comparative Example 1 | Comparative Example 2 | Comparative Example 3 | Comparative Example 4 |
|---|---|---|---|---|---|
| Evaluation | T-peeling adhesive strength [N/25 mm] | 11.6 | 200.5 | 170.5 | 261.2 |
| | Peeling form | CF100 | AF100 | CF100 | CF100 |
| | Viscosity [mPa·s] | 20,638 | 66,676 | 213,000 | 1,140,000 |

[6. Test result]

As shown in Table 2, it has been made clear that the adhesive agent in accordance with an embodiment of the present invention obtained in each of Examples 1 to 5 is favorable in terms of all of the peeling form, the adhesive strength, and the viscosity. It has also been made clear that the fine polymer particles (B) having a lower glass transition temperature (Tg) cause the adhesive agent to have a lower viscosity.

Furthermore, the adhesive agent obtained in each of Examples 1 to 5 was a one-component type adhesive agent as described earlier. As shown in Table 2, the one-component type adhesive agent obtained in each of Examples 1 to 5 was favorable in terms of all of the peeling form, the adhesive strength, and the viscosity. Thus, it has been found that the adhesive agent in accordance with an embodiment of the present invention can be suitably used also as a one-component type adhesive agent.

Industrial Applicability

The present invention can be widely used in the field of adhesive agents.

Reference Signs List

10   Fine polymer particles (B)
20   Domain of non-crosslinked acrylic resin (C)

**Claims**

1.  An adhesive agent comprising:

    an epoxy resin (A); and
    with respect to 100 parts by mass of the epoxy resin (A), 1 part by mass to 100 parts by mass of fine polymer particles (B) and 1 part by mass to 100 parts by mass of a non-crosslinked acrylic resin (C),
    the fine polymer particles (B) containing a rubber-containing graft copolymer that includes an elastic body and a graft part grafted to the elastic body,
    the elastic body containing at least one selected from the group consisting of diene-based rubbers, (meth)acrylatebased rubbers, and organosiloxane-based rubbers,
    the graft part containing a polymer that contains, as one or more structural units, one or more structural units derived from at least one type of monomer selected from the group consisting of aromatic vinyl monomers, vinyl cyanide monomers, and (meth)acrylate monomers,
    the non-crosslinked acrylic resin (C) forming a domain in a cured product that is obtained by curing the adhesive agent, and
    the fine polymer particles (B) having an average particle size that is larger than a longitudinal dimension of the domain.

2.  The adhesive agent as set forth in claim 1, wherein the fine polymer particles (B) are contained in an amount of 50% by weight to 99% by weight and the non-crosslinked acrylic resin (C) is contained in an amount of 1% by weight to 50% by weight, where 100% by weight represents the total amount of the fine polymer particles (B) and the non-crosslinked acrylic resin (C).

3.  The adhesive agent as set forth in claim 1 or 2, wherein the non-crosslinked acrylic resin (C) has a weight average molecular weight of not more than 100,000.

4.  The adhesive agent as set forth in any one of claims 1 through 3, wherein the non-crosslinked acrylic resin (C) has a glass transition temperature of not higher than 80°C.

5.  The adhesive agent as set forth in any one of claims 1 through 4, wherein the non-crosslinked acrylic resin (C) is a liquid having a viscosity of not more than 1,000,000 mPa·s at 25°C.

6.  A method for producing an adhesive agent, comprising a mixing step of mixing 100 parts by mass of an epoxy resin (A) and a powdery and/or granular material containing 1 part by mass to 100 parts by mass of fine polymer particles (B) and 1 part by mass to 100 parts by mass of a non-crosslinked acrylic resin (C),

the fine polymer particles (B) containing a rubber-containing graft copolymer that includes an elastic body and a graft part grafted to the elastic body,
the elastic body containing at least one selected from the group consisting of diene-based rubbers, (meth)acrylatebased rubbers, and organosiloxane-based rubbers, and
the graft part containing a polymer that contains, as one or more structural units, one or more structural units derived from at least one type of monomer selected from the group consisting of aromatic vinyl monomers, vinyl cyanide monomers, and (meth)acrylate monomers.

7. A method as set forth in claim 6, further comprising, before the mixing step, a powdery and/or granular material preparing step of preparing the powdery and/or granular material containing 1 part by mass to 100 parts by mass of the fine polymer particles (B) and 1 part by mass to 100 parts by mass of the non-crosslinked acrylic resin (C).

8. The method as set forth in claim 6 or 7, wherein the non-crosslinked acrylic resin (C) forms a domain in a cured product that is obtained by curing the adhesive agent.

9. The method as set forth in claim 8, wherein the fine polymer particles (B) have an average particle size that is larger than a longitudinal dimension of the domain.

10. The method as set forth in any one of claims 7 through 9, wherein a force required to break a block of the powdery and/or granular material is not more than 30000 Pa, wherein:

the block is a block obtained by applying, to the powdery and/or granular material which is being allowed to stand, a load of 6.3 kg at 60°C for 2 hours by placing a 6.3 kg weight on 30 g of the powdery and/or granular material contained in a cylindrical container having a diameter of 50 mm, and
the force is a value obtained by measurement using a rheometer.

FIG. 1

2x400 10.0kV 16.6mm x30.0k SE(U)                    1.00um

**INTERNATIONAL SEARCH REPORT**

| International application No. |
|---|
| PCT/JP2020/036319 |

A. CLASSIFICATION OF SUBJECT MATTER

C08F 291/02(2006.01)i; C08L 33/04(2006.01)i; C08L 51/04(2006.01)i; C09J
133/04(2006.01)i; C09J 151/00(2006.01)i; C09J 163/00(2006.01)i; C08L
63/00(2006.01)i
FI:      C09J163/00; C08L63/00 A; C08L51/04; C08L33/04; C08F291/02;
         C09J133/04; C09J151/00

According to International Patent Classification (IPC) or to both national classification and IPC

B. FIELDS SEARCHED

Minimum documentation searched (classification system followed by classification symbols)

C08F291/02; C08L33/04; C08L51/04; C09J133/04; C09J151/00; C09J163/00;
C08L63/00

Documentation searched other than minimum documentation to the extent that such documents are included in the fields searched

Published examined utility model applications of Japan      1922-1996
Published unexamined utility model applications of Japan    1971-2020
Registered utility model specifications of Japan            1996-2020
Published registered utility model applications of Japan    1994-2020

Electronic data base consulted during the international search (name of data base and, where practicable, search terms used)

JSTPlus (JDreamIII)

C. DOCUMENTS CONSIDERED TO BE RELEVANT

| Category* | Citation of document, with indication, where appropriate, of the relevant passages | Relevant to claim No. |
|---|---|---|
| Y | JP 2016-199739 A (KANEKA CORP.) 01 December 2016 (2016-12-01) claim 1, Effect of the invention, production example 2, example 1 | 1-10 |
| Y | JP 11-60818 A (SEKISUI CHEMICAL CO., LTD.) 05 March 1999 (1999-03-05) claims 1-3, Effect of the invention, example 1 | 1-10 |
| A | JP 2010-180351 A (THE YOKOHAMA RUBBER CO., LTD.) 19 August 2010 (2010-08-19) entire text | 1-10 |
| A | WO 2011/062149 A1 (HITACHI CHEMICAL INDUSTRY CO., LTD.) 26 May 2011 (2011-05-26) entire text | 1-10 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 29 October 2020 (29.10.2020) | 10 November 2020 (10.11.2020) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

INTERNATIONAL SEARCH REPORT
Information on patent family members

International application No.

PCT/JP2020/036319

| Patent Documents referred in the Report | Publication Date | Patent Family | Publication Date |
|---|---|---|---|
| JP 2016-199739 A | 01 Dec. 2016 | (Family: none) | |
| JP 11-60818 A | 05 Mar. 1999 | (Family: none) | |
| JP 2010-180351 A | 19 Aug. 2010 | (Family: none) | |
| WO 2011/062149 A1 | 26 May 2011 | CN 102686690 A entire text KR 10-2012-0087978 A entire text | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018053026 A
- WO 2005028546 A
- WO 2006070664 A
- WO 2016163491 A
- US 5084532 A
- US 6015865 A